# EUROPEAN PATENT APPLICATION

(11) **EP 4 570 622 A1**
(43) Date of publication of application: **18.06.2025**
(21) Application number: 23852405.2
(22) Date of filing: 28.07.2023
(51) Int. Cl.: B62D 5/04, B62D 1/16, F16F 7/00

(54) **ROTATION LIMITING DEVICE AND STEERING DEVICE**

(30) Priority: 10.08.2022 JP 2022127888
(71) Applicant: NSK Steering & Control, Inc., Tokyo, 141-0032 (JP)
(72) Inventor: HATANAKA Kazuyuki, Maebashi-shi, Gunma 371-8527 (JP)
(74) Representative: Müller-Boré & Partner Patentanwälte PartG mbB
(86) International application number: PCT/JP2023/027737
(87) International publication number: WO 2024/034432

(57) **Abstract**

[Problem] A structure capable of improving degrees of freedom in setting the rotatable amount of a rotating member is provided for rotation limiting device. [Solution] The rotation limiting device 4 has a first member 14 having an end axially one-sided protrusion 17, a second member 15 having an end one-sided abutment surface 23 and an end other-sided abutment surface 24, and at least one intermediate member 16 having an intermediate radial protrusion 29 and an intermediate axially one-sided protrusion 30. The intermediate radial protrusion 29 has an intermediate one-sided abutment surface 32 on one side surface in the circumferential direction and an intermediate other-sided abutment surface 33 on the other side surface in the circumferential direction.

## Description

### TECHNICAL FIELD

The present disclosure relates to a rotation limiting device for limiting the rotatable amount of a rotating member, and a steering device.

### BACKGROUND ART

In a rack-and-pinion steering device, when a steering wheel is operated to the maximum right or left, a rack end, which is supported and fixed to an end portion of a rack shaft, hits a housing. As such, in the rack-and-pinion steering device in which a steering unit and a turning unit are mechanically connected, by limiting the stroke of the rack shaft of the turning unit, the number of lock-to-lock rotations, which is the rotation number of the steering wheel when operating the steering wheel from its maximum right or left to the maximum left or right, is limited.

In contrast, in a steer-by-wire steering device, the steering unit and the turning unit are not mechanically connected. Therefore, the number of lock-to-lock rotations of the steering wheel of the steering unit cannot be limited by limiting the stroke of the rack shaft of the turning unit.

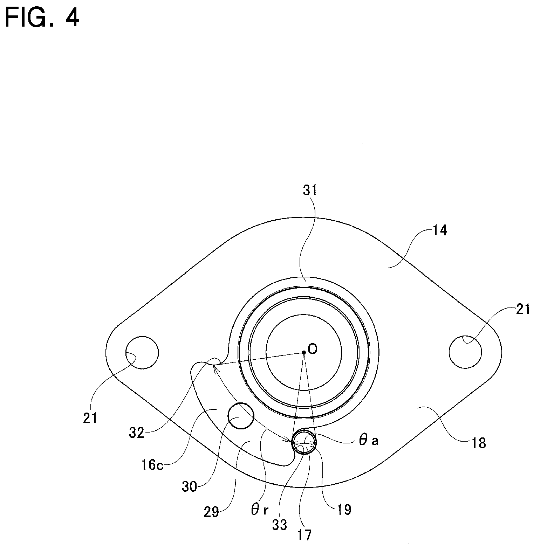

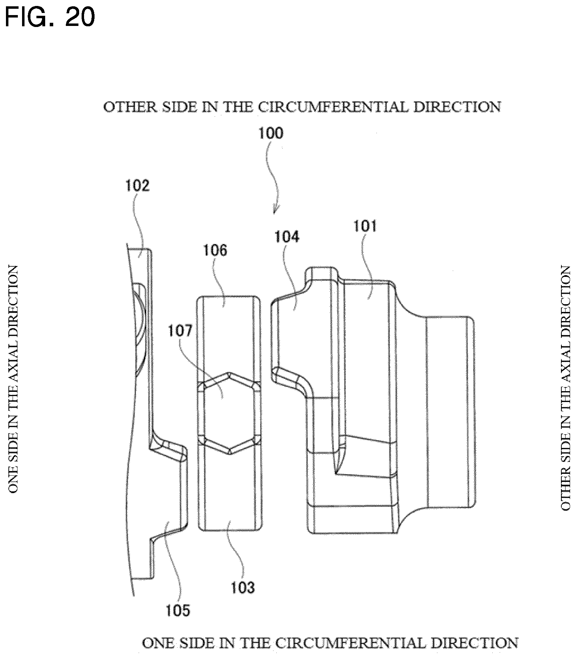

FIG. 20 illustrates a stopper unit 100 for mechanically limiting the number of lock-to-lock rotations of the steering wheel in a steer-by-wire steering device described in JP 2020-069844 A. However, FIG. 20 illustrates FIG. 4 of JP 2020-069844 A with the left and right reversed. The stopper unit 100 includes a first rotating member 101, a housing 102, and a second rotating member 103.

The first rotating member 101 has a first rotating protrusion 104 that protrudes toward one side in the axial direction on a surface on the one side in the axial direction (the left side surface in FIG. 20). The first rotating member 101 is joined and fixed to an end portion on the other side in the axial direction of the steering shaft (not illustrated) so as not to relatively rotate. That is, the first rotating member 101 rotates integrally with the steering shaft in accordance with the operation of the steering wheel.

The housing 102 has a fixed protrusion 105 that protrudes toward a surface on the other side in the axial direction (the right side surface in FIG. 20), and does not rotate even during use. The steering shaft is supported on the inside in the radial direction of the housing 102 so as to be capable of rotating relative to the housing 102.

The second rotating member 103 has a cylindrical portion 106 and a second rotating protrusion 107 that protrudes toward the outside in the radial direction from one location in the circumferential direction of the outer peripheral surface of the cylindrical portion 106. The second rotating member 103 is supported around the steering shaft so as to be capable of rotating relative to the steering shaft, the first rotating member 101, and the housing 102.

That is, the steering shaft is inserted through the housing 102 and the second rotating member 103 from the one side in the axial direction to the other side in the axial direction, and the first rotating member 101 is joined and fixed a tip end portion of the steering shaft that protrudes from an end surface on the other side in the axial direction of the second rotating member 103. Furthermore, a steering wheel is supported and fixed to the end portion on the one side in the axial direction of the steering shaft.

In a steering device including the stopper unit 100, for example, when the steering wheel is operated to the right (rotated in the clockwise direction when viewed from the left side of FIG. 20), first, the first rotating member 101 rotates together with the steering shaft from the upper side to the lower side of FIG. 20. Then, one side surface in the circumferential direction of the first rotating protrusion 104 (the lower side surface in FIG. 20) hits the other side surface in the circumferential direction (the upper side surface in FIG. 20) of a portion on the other side in the axial direction of the second rotating protrusion 107.

When the steering wheel is turned further to the right from this state, the second rotating member 103 rotates together with the steering shaft and the first rotating member 101 from the upper side to the lower side of FIG. 20. Then, one side surface in the circumferential direction of a portion on the one side in the axial direction of the second rotating protrusion 107 abuts against the other side surface in the circumferential direction of the fixed protrusion 105. This limits the steering wheel from being operated further to the right.

### CITATION LIST

### PATENT LITERATURE

Patent Literature 1: JP 2020-069844 A

### SUMMARY OF INVENTION

### TECHNICAL PROBLEM

In the stopper unit 100 described in JP 2020-069844 A, the angle at which the first rotating member 101 can be rotated relative to the second rotating member 103 is smaller than 360 degrees by the sum of the width in the circumferential direction of the first rotating protrusion 104 and the width in the circumferential direction of the second rotating protrusion 107. Furthermore, the angle at which the second rotating member 103 can be rotated relative to the housing 102 is smaller than 360 degrees by the sum of the width in the circumferential direction of the fixed protrusion 105 and the width in the circumferential direction of the second rotating protrusion 107. Therefore, in a steering device including the stopper unit 100, the rotatable amount (rotatable angle) of the steering shaft is limited to less than ±360 degrees. Accordingly, the number of lock-to-lock rotations of the steering wheel is limited to less than two rotations.

However, in steering devices for general passeger cars that have become widespread in recent years, the number of lock-to-lock rotations is greater than two rotations. For example, in a so-called family car, the number of lock-to-lock rotations is about four rotations, and is about two to three rotations even in a sports car. Therefore, a rotation limiting device that allows a high degree of freedom in setting the number of lock-to-lock rotations of the steering wheel is desired.

An object according to the present disclosure is to achieve a rotation limiting device that allows a high degree of freedom in setting the rotatable amount of a rotating member.

### SOLUTION TO PROBLEM

A rotation limiting device according to an aspect of the present disclosure includes a first member, a second member, and at least one intermediate member.

The first member has an end axially one-sided protrusion protruding toward one side in an axial direction at a location deviated in a radial direction from a center axis thereof.

The second member has an end one-sided abutment surface facing one side in a circumferential direction and an end other-sided abutment surface facing the other side in the circumferential direction. The second member is arranged coaxially with the first member so as to be capable of rotating relative to the first member.

The at least one intermediate member has an intermediate radial protrusion protruding toward an outside in the radial direction and an intermediate axially one-sided protrusion protruding from a surface on the one side in the axial direction of the intermediate radial protrusion toward the one side in the axial direction. The at least one intermediate member is arranged between the first member and the second member in the axial direction and coaxially with the first member and the second member so as to be capable of rotating relative to the first member and the second member.

The intermediate radial protrusion has an intermediate one-sided abutment surface on one side surface in the circumferential direction, and an intermediate other-sided abutment surface on the other side surface in the circumferential direction.

The end one-sided abutment surface and the end other-sided abutment surface circumferentially face the intermediate axially one-sided protrusion of an intermediate member of the at least one intermediate member that is arranged adjacent to the other side in the axial direction of the second member. In other words, the end one-sided abutment surface and the end other-sided abutment surface overlap in the circumferential direction with the intermediate axial protrusion of the intermediate member that is arranged adjacent to the other side in the axial direction of the second member.

The intermediate one-sided abutment surface and the intermediate other-sided abutment surface of one intermediate member of the at least one intermediate member circumferentially face the intermediate axially one-sided protrusion or the end axially one-sided protrusion of another intermediate member arranged adjacent to the other side in the axial direction of the one intermediate member. In other words, the intermediate one-sided abutment surface and the intermediate other-sided abutment surface of the one intermediate member of the at least one intermediate member overlap in the circumferential direction with the intermediate axially one-sided protrusion or the end axially one-sided protrusion of another intermediate member arranged adjacent to the other side in the axial direction of the one intermediate member.

In the rotation limiting device according to an aspect of the present disclosure, the second member may have an end radial protrusion that protrudes in the radial direction and the end radial protrusion has the end one-sided abutment surface on the one side surface in the circumferential direction and the end other-sided abutment surface on the other side surface in the circumferential direction.

Alternatively, in the rotation limiting device according to an aspect of the present disclosure, the second member may have a groove portion that opens at least to a surface on the other side in the axial direction, the end one-sided abutment surface on a surface facing the one side in the circumferential direction of an inner surface of the groove portion, and the end other-sided abutment surface on a surface facing the other side in the circumferential direction of the inner surface of the groove portion.

In the rotation limiting device according to an aspect of the present disclosure,
one of the first member and the second member may have a cylindrical portion that protrudes in the axial direction,
the other of the first member and the second member may have a circular opening into which the cylindrical portion is fitted so as to be capable of relative rotation, and
the at least one intermediate member may have an intermediate circular opening into which the cylindrical portion is fitted so as to be capable of relative rotation.

The rotation limiting device according to an aspect of the present disclosure may include a retaining ring locked to a portion of the cylindrical portion that protrudes in the axial direction from the other member.

The rotation limiting device according to an aspect of the present disclosure may include a cylindrical elastic ring externally fitted onto the end axially one-sided protrusion and/or the intermediate axially one-sided protrusion.

In the rotation limiting device according to an aspect of the present disclosure, an outer peripheral surface of the end axially one-sided protrusion and an outer peripheral surface of the intermediate axially one-sided protrusion can be configured by cylindrical surfaces having an equal radius of curvature, and
the end one-sided abutment surface and the end other-sided abutment surface, and the intermediate one-sided abutment surface and the intermediate other-sided abutment surface are each configured by a partial cylindrical surface-shaped concave curved surface having an equal radius of curvature that is greater than a radius of curvature of the outer peripheral surface of the end axially one-sided protrusion.

In the rotation limiting device according to an aspect of the present disclosure,
a radius of a first imaginary circle centered on the center axis of the first member and passing through a center axis of the outer peripheral surface of the end axially one-sided protrusion may be smaller than a radius of a second imaginary circle centered on a center axis of the intermediate member and passing through a center of curvature of the intermediate one-sided abutment surface and a center of curvature of the intermediate other-sided abutment surface.

In the rotation limiting device according to an aspect of the present disclosure,
the at least one intermediate member may be configured by a plurality of intermediate members, and
of the plurality of intermediate members, remaining intermediate members except for an intermediate member which is arranged on farthest to the other side in the axial direction may have an intermediate axially other-sided protrusion that protrudes from a side surface on the other side in the axial direction of the intermediate protrusion toward the other side in the axial direction, and
the second member may have an end axially other-sided protrusion at a location deviated in the radial direction from a center axis thereof, the end axially other-sided protrusion protruding toward the other side in the axial direction and circumferentially facing the intermediate one-sided abutment surface and the intermediate other-sided abutment surface of an intermediate member of the plurality of intermediate members that is arranged farthest on the one side in the axial direction.

In this case, the intermediate member that is arranged farthest on the other side in the axial direction may have an intermediate axially other-sided protrusion that protrudes from a side surface on the other side in the axial direction of the intermediate protrusion toward the other side in the axial direction, and
the first member may have a cut-out portion in which the intermediate axially other-sided protrusion of the intermediate member arranged farthest on the other side in the axial direction is arranged so as to allow rotation of the intermediate member arranged farthest on the other side in the axial direction relative to the first member.

The steering device according to an aspect of the present disclosure includes a steering shaft and a rotation limiting device that limits a rotatable amount of the steering shaft to a predetermined value.

The rotation limiting device is configured by the rotation limiting device according to an aspect of the present disclosure, wherein
the first member is joined and fixed to the steering shaft and the second member is supported and fixed to a fixed portion that does not rotate even during use, alternatively, the first member is supported and fixed to the fixed portion and the second member is supported and fixed to the steering shaft.

### EFFECT OF INVENTION

With the rotation limiting device according to an aspect of the present disclosure, degrees of freedom in setting the rotatable amount of the rotating member can be improved.

### BRIEF DESCRIPTION OF DRAWINGS

[FIG. 1] FIG. 1 is a schematic view illustrating an example of a steer-by-wire steering device including a rotation limiting device of a first example of an embodiment according to the present disclosure.
[FIG. 2] FIG. 2 is a perspective view illustrating a rotation limiting device of the first example.
[FIG. 3] FIG. 3 is an end view illustrating the rotation limiting device of the first example.
[FIG. 4] FIG. 4 is an end view illustrating a first member and one intermediate member removed from the rotation limiting device of the first example.
[FIG. 5] FIG. 5 is an enlarged view of a portion X in FIG. 3.
[FIG. 6] FIG. 6 is a cross-sectional view of section Y-Y of FIG. 3.
[FIG. 7] FIG. 7 is an exploded perspective view illustrating the rotation limiting device of the first example.
[FIG. 8] FIG. 8A to FIG. 8E are schematic views for explaining the operation of the rotation limiting device when operating the steering wheel from the maximum right to the maximum left.
[FIG. 9] FIG. 9A to FIG. 9E are schematic views for explaining the operation of the rotation limiting device when operating the steering wheel from the maximum left to the maximum right.
[FIG. 10] FIG. 10 is a cross-sectional view illustrating a variation of a structure of a press-fitting portion of a pin.
[FIG. 11] FIG. 11 is a perspective view illustrating a rotation limiting device of a second example of an embodiment according to the present disclosure.
[FIG. 12] FIG. 12 is a perspective view of the rotation limiting device of the second example as viewed from an angle different from that of FIG. 11.
[FIG. 13] FIG. 13 is an exploded perspective view of the rotation limiting device of the second example.
[FIG. 14] FIG. 14A to FIG. 14E are schematic views for explaining the operation of the rotation limiting device of a third example of an embodiment according to the present disclosure, when operating the steering wheel from the maximum right to the maximum left.
[FIG. 15] FIG. 15A to FIG. 15E are schematic views for explaining the operation of the rotation limiting device of the third example, when operating the steering wheel from the maximum left to the maximum right.
[FIG. 16] FIG. 16 is an end view of the first member removed from the rotation limiting device of the third example and viewed from one side in the axial direction.
[FIG. 17] FIG. 17 is a partially enlarged view of an intermediate member of a rotation limiting device of a fourth example of an embodiment according to the present disclosure.
[FIG. 18] FIG. 18A and FIG. 18B are partially enlarged views illustrating two other examples of attaching configurations of an elastic ring.
[FIG. 19] FIG. 19A is a partially enlarged cross-sectional view of an intermediate member of the rotation limiting device of the fourth example of an embodiment according to the present disclosure, FIG. 19B is an exploded cross-sectional view illustrating a base plate and a pin of the intermediate member, and FIG. 19C is a cross-sectional view illustrating a state in which the base plate and the pin are combined.
[FIG. 20] FIG. 20 is an exploded view illustrating a stopper unit of a conventional configuration.

### DESCRIPTION OF EMBODIMENTS

### [First Example]

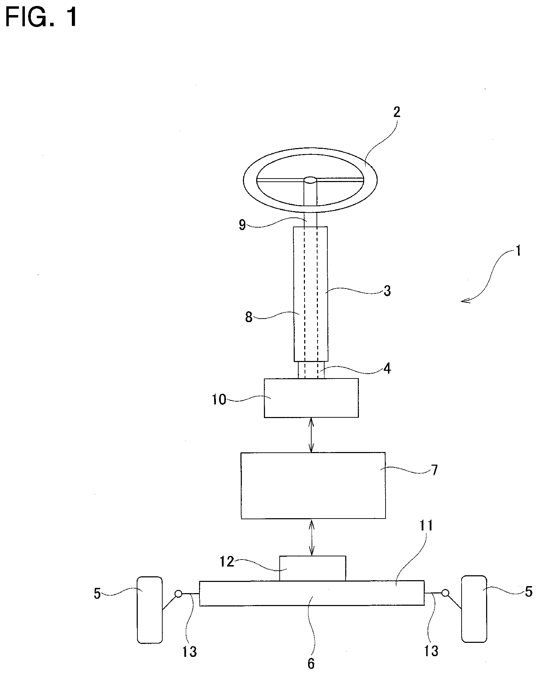

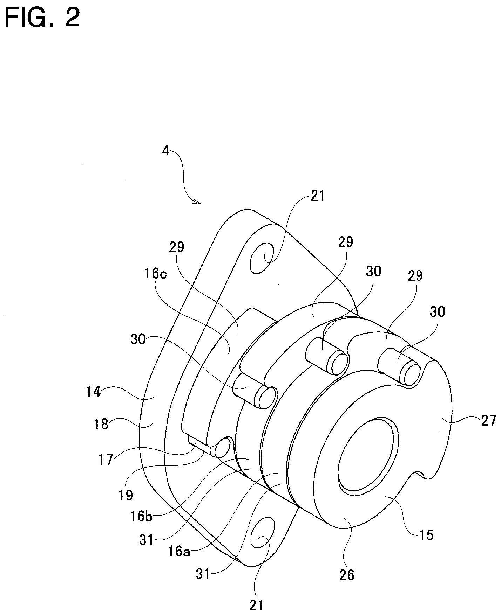

A first example of an embodiment according to the present disclosure will be described with reference to FIG. 1 to FIG. 10. The present example is an example in which a rotation limiting device 4 is incorporated into a steering unit 3 of a steer-by-wire steering device 1, in order to limit the number of lock-to-lock rotations of a steering wheel 2 of the steering device 1. In the following, the overall structure of the steering device 1 will be described, and then the structure and operation of the rotation limiting device 4 will be described. In the following description, the forward-backward direction refers to the forward-backward direction of the vehicle.

### <Overall Structure of Steering Device 1>

As illustrated in FIG. 1, the steering device 1 includes a steering unit 3 having a steering wheel 2, a turning unit 6 that applies a steering angle to a pair of sterred wheels 5, and a control unit (ECU) 7. The steering device 1 has a linkless structure in which the steering unit 3 and the turning unit 6 are not mechanically connected, but are electrically connected to each other through a control unit 7.

The steering unit 3 includes a steering column 8, a steering shaft 9, a reaction force application device 10, and a rotation limiting device 4.

The steering column 8 has a cylindrical shape, and is supported by the vehicle body.

The steering shaft 9 is rotatably supported on the inside in the radial direction of the steering column 8. The steering wheel 2 is supported and fixed to an end portion on the rear side of the steering shaft 9.

The reaction force application device 10 is connected to an end portion on the front side of the steering shaft 9. The reaction force application device 10 includes a motor for applying a reaction force and a reducer such as a worm reducer, and applies an output torque of the motor for applying a reaction force to the steering shaft 9 after increasing the output torque by the reducer.

The rotation limiting device 4 is provided between the steering shaft 9 and a portion that does not rotate even during use, and limits the number of lock-to-lock rotations of the steering wheel 2. In the present example, the rotation limiting device 4 is provided between a front-side portion of the steering shaft 9 and an end portion on the front side of the steering column 8 that does not rotate even during use. However, the rotation limiting device 4 can be provided at any location between the steering shaft 9 and a fixed portion that does not rotate even during use.

More specifically, the rotation limiting device 4 may be provided in a portion closer to the steering wheel 2, for example, between a portion on the rear side of the steering shaft 9 and an end portion on the rear side of the steering column 8. Alternatively, the rotation limiting device 4 may be provided between the end portion on the front side of the steering shaft 9 and a housing of the reaction force application device 10 that does not rotate even during use. If the rotation limiting device 4 is arranged between the end portion on the front side of the steering shaft 9 and the housing of the reaction force application device 10, the rotation limiting device 4 can be attached and detached relatively easily.

The steering unit 3 further includes sensors (not illustrated) such as a torque sensor and a steering angle sensor that measure the operation of the steering wheel 2 by a driver.

The turning unit 6 includes a gear housing 11 supported and fixed to the vehicle body, a linear motion member (not illustrated), and a steering actuator 12 that linearly drives the linear motion member.

The linear motion member is configured by such as a rack shaft and a screw shaft. The linear motion member has its axial direction oriented in the width direction of the vehicle body, and is supported inside the gear housing 11 so as to be capable of linear motion in the axial direction. Base-end portions of a pair of tie rods 13 are connected to end portions on both sides in the axial direction of the linear motion member through a sphercal joints (not illustrated), and a pair of sterred wheels 5 are supported at tip end portions of the pair of tie rods 13.

When the linear motion member is configured by a rack shaft, the steering actuator 12 includes a pinion shaft that engages with the rack shaft, a steering motor, and a reducer, and increases the output torque of the steering motor by the reducer and then inputs the output torque to the pinion shaft so as to rotationally drives the pinion shaft to linearly move the rack shaft.

When the linear motion member is configured by a screw shaft, the steering actuator 12 includes a nut supported around the screw shaft so as to be capable of rotating relative to the screw shaft, a steering motor, and a reducer. The steering actuator 12 increases the output torque of the steering motor by the reducer and then inputs the output toruqe to the nut so as to rotationally drives the nut to linearly move the screw shaft. Here, a feed screw mechanism including the screw shaft and the nut may be configured by a sliding screw type feed screw mechanism in which a male screw portion provided on the outer peripheral surface of the screw shaft and a female screw portion provided on the inner peripheral surface of the nut are directly screwed together, and it may also be configured by a ball screw type feed screw mechanism in which a plurality of balls are arranged between an inner diameter side ball screw groove provided on the outer peripheral surface of the screw shaft and an outer diameter side ball screw groove provided on the inner peripheral surface of the nut so as to be able to freely roll.

In steering device 1 of the present example, when the driver operates the steering wheel 2, the operation of the steering wheel 2 is measured by a sensor in the steering unit 3, and the measurement result is output to the control unit 7. The control unit 7 receives various signals indicating driving conditions, such as steering torque measured by a torque sensor, steering angle measured by a steering angle sensor, vehicle speed, yaw rate, acceleration. The control unit 7 drives the steering actuator 12 provided in the turning unit 6 based on various signals indicating the driving conditions. As a result, the linear motion member is displaced in the width direction of the vehicle body, the pair of tie rods 13 are pushed and pulled, and a steering angle is applied to the pair of steered wheels 5.

### <Structure of Rotation Limiting Device 4>

The rotation limiting device 4 of the present example is provided between the front-side portion of the steering shaft 9 and the steering column 8 which does not rotate even during use, and limits the number of lock-to-lock rotations of the steering wheel 2 by limiting the rotatable amount of the steering shaft 9 by limiting the rotatable amount to a predetermined value.

The rotation limiting device 4 includes a first member 14, a second member 15 and at least one intermediate member 16a, 16b, 16c. The rotation limiting device 4 can adjust the rotatable amount of the steering shaft 9, which is joined and fixed to the second member 15, by changing the number of intermediate member 16a, 16b, 16c. That is, the more the number of intermediate member 16a, 16b, 16c is increased, the more the rotatable amount of the steering shaft 9 is increased, whereas the more the number of intermediate member 16a, 16b, 16c is decreased, the more the rotatable amount of the steering shaft 9 is decreased.

In the present example, the at least one intermediate member 16a, 16b, 16c is configured by three intermediate members 16a, 16b, 16c. In the present example, the intermediate members 16a, 16b, 16c are given different reference numbers for the convenience of explanation, but have an equal shape. In the present example, the second member 15 configures one member having a cylindrical portion, and the first member 14 configures the other member having a circular opening.

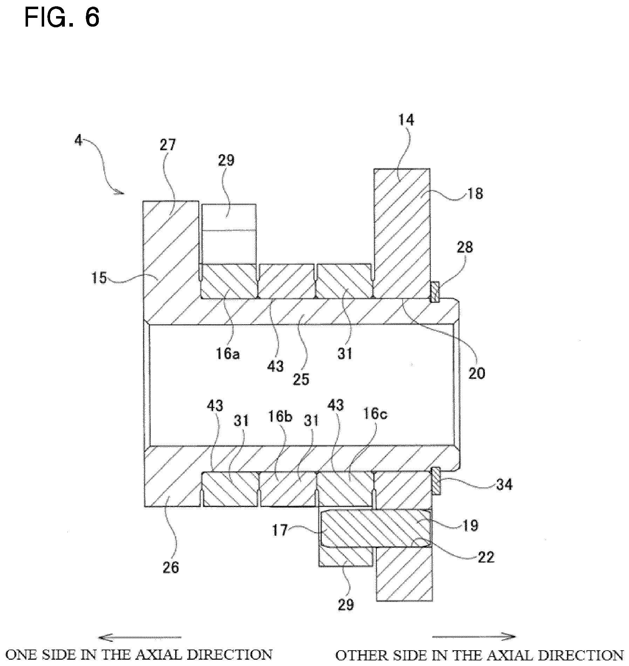

The first member 14 has an end axially one-sided protrusion 17 that protrudes toward one side in the axial direction (the left side in FIG. 6) at a location deviated in the radial direction from a center axis thereof.

In the present example, the first member 14 includes a base plate 18 and a pin 19.

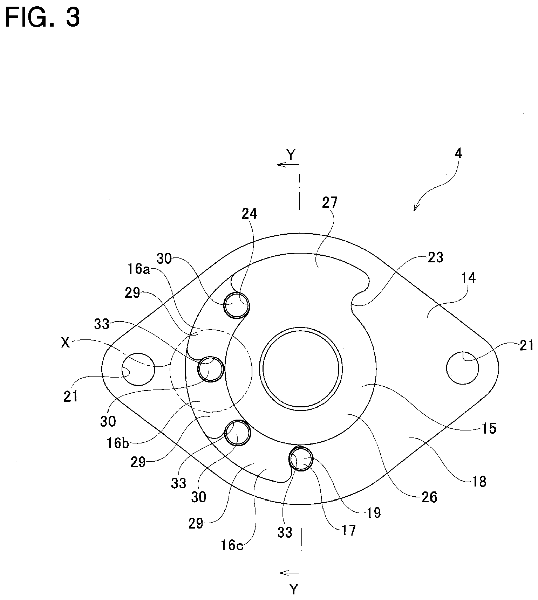

The base plate 18 is configured by a flat plate having an end surface shape that is substantially diamond-shaped when viewed from the axial direction. The base plate 18 has a circular opening 20 penetrating in the axial direction in the central portion, and has installation holes 21 penetrating in the axial direction at end portions on both sides in the long diagonal direction (left and right direction in FIG. 3). Furthermore, the base plate 18 has a press-fit hole 22 penetrating in the axial direction at a portion deviated from the circular opening 20 in one side in the short diagonal direction (the lower side in FIG. 3).

The pin 19 has a columnar shape.

The first member 14 is configured by pressing an end portion of the pin 19 on the other side in the axial direction (the right side in FIG. 6) into the press-fit hole 22 of the base plate 18 so as to join and fix the base plate 18 and the pin 19. That is, in the present example, the end axially one-sided protrusion 17 is configured by a portion on the one side in the axial direction of the pin 19 that protrudes more toward the one side in the axial direction than the surface on the one side in the axial direction of base plate 18.

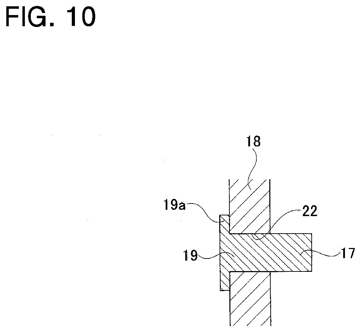

As illustrated in FIG. 10, the first member 14 can be confiured by providing a pin flange 19a protruding toward outside in the radial direction at the end portion on the other side in the axial direction of the pin 19, and pressing the pin 19 into the press-fit hole 22 of the base plate 18 from the other side in the axial direction. As a result, even if a force in a direction in which the pin 19 tilts relative to the base plate 18 is repeatedly applied to the pin 19 due to collision between the end axially one-sided protrusion 17 of the first member 14 and an intermediate one-sided abutment surface 32 or an intermediate other-sided abutment surface 33 of the intermediate member 16c on the other side in the axial direction, the pin 19 can be prevented from falling out of the press-fit hole 22.

In the rotation limiting device 4 of the present example, by screwing connecting bolts inserted throug respective installation holes 21 of the base plate 18 into column-side screw holes opening on the front-side surface of the steering column 8, the first member 14 is supported and fixed to the steering column 8 which does not rotate even during use. That is, the rotation limiting device 4 of the present example is incorporated ino the steering device 1 with the one side in the axial direction facing the front side of the vehicle and the other side in the axial direction facing the rear side of the vehicle.

The second member 15 has an end one-sided abutment surface 23 facing one side in the circumferential direction (the front side in the clockwise direction in FIG. 3) and an end other-sided abutment surface 24 facing the other side in the circumferential direction (the rear side in the clockwise direction in FIG. 3), and is arranged coaxially with the first member 14 and so as to be capable of rotating relative to the first member 14.

In the present example, the second member 15 includes a cylindrical portion 25, a flange portion 26, and an end radial protrusion 27.

The cylindrical portion 25 has an outer diameter slightly smaller than the inner diameter of the circular opening 20 of the first member 14. Furthermore, the cylindrical portion 25 has a locking groove 28 over the whole circumference on the outer peripheral surface of an end portion on the other side in the axial direction.

The flange portion 26 protrudes from the outer peripheral surface of an end portion on the one side in the axial direction of the cylindrical portion 25 toward the outside in the radial direction over the whole circumference.

In the rotation limiting device 4 of the present example, the cylindrical portion 25 is externally fitted and fixed to the steering shaft 9 so as not to relatively rotate. More specifically, a female spline portion provided on the inner peripheral surface of the cylindrical portion 25 is spline-engaged with a male spline portion provided on the outer peripheral surface of the front-side portion of the steering shaft 9. As a result, the second member 15 is supported and fixed to the steering shaft 9 which rotates in accordance with the operation of the steering wheel 2.

The end radial protrusion 27 has a substantialy fan-shaped end surface shape when viewed from the axial direction, and protrudes toward the outside in the radial direction from one part in the circumferential direction of the flange portion 26. The end radial protrusion 27 has the end one-sided abutment surface 23 on the one side surface in the circumferential direction, and the end other-sided abutment surface 24 on the other side surface in the circumferential direction.

In the present example, the end one-sided abutment surface 23 and the end other-sided abutment surface 24 are configured by a partial cylindrical surface-shaped concave curved surface.

In the present example, each of the intermediate members 16a, 16b, 16c includes a base portion 31, an intermediate radial protrusion 29, and an intermediate axially one-sided protrusion 30. The intermediate members 16a, 16b, 16c are arranged between the first member 14 and the second member 15 in the axial direction so as to be coaxial with the first member 14 and the second member 15, and so as to be capable of rotating relative to the first member 14 and the second member 15.

The base portion 31 has an intermediate circular opening 43 penetrating in the axial direction at a center portion thereof. In the present example, the base portion 31 is configured in a cylindrical shape, and has an inner diameter slightly larger than the outer diameter of the cylindrical portion 25 of the second member 15 and an outer diameter substantially the same as the outer diameter of the flange portion 26.

The intermediate radial protrusion 29 has a substantialy fan-shaped end surface shape when viewed from the axial direction, and protrudes toward the outside in the radial direction from one part in the circumferential direction of the base portion 31. The intermediate radial protrusion 29 has an intermediate one-sided abutment surface 32 on the one side surface in the circumferential direction, and an intermediate other-sided abutment surface 33 on the other side surface in the circumferential direction. In the present example, the intermediate one-sided abutment surface 32 and the intermediate other-sided abutment surface 33 are configured by a partial cylindrical surface-shaped concave curved surface.

The intermediate axially one-sided protrusion 30 has a columnar shape, and protrudes toward the one side in the axial direction from the center position in the circumferential direction of a surface on the one side in the axial direction of the intermediate radial protrusion 29.

The rotation limiting device 4 of the present example is configured by combining the first member 14, the second member 15, and the three intermediate members 16a, 16b, 16c so as to be capable of rotating relative to each other. More specifically, the cylindrical portion 25 of the second member 15 is fitted into the intermediate circular openings 43 of the intermediate members 16a, 16b, 16c and the circular opening 20 of the first member 14 so as to be capable of relative rotation. A partially cylindrical retaining ring 34 is locked to the locking groove 28 formed on the outer peripheral surface of the end portion on the other side in the axial direction of the cylindrical portion 25, which protrudes more to the other side in the axial direction than the surface on the other side in the axial direction of the first member 14.

It is preferable that the rotational resistance of the intermediate member and the other member relative to the cylindrical portion is low.

For this reason, grease lubrication can be provided between the outer peripheral surface of the cylindrical portion, and the inner peripheral surface of the intermediate circular openings and the inner peripheral surface of the circular opening.

Alternatively, at least one of the outer peripheral surface of the cylindrical portion, and the inner peripheral surface of the intermediate circular openings and the inner peripheral surface of the circular opening can be configured by a low-friction material such as polyethylene tetrafluoroethylene resin, polyamide resin, and molybdenum disulfide. More specifically, at least one of the outer peripheral surface of the cylindrical portion, and the inner peripheral surface of the intermediate circular openings and the inner peripheral surface of the circular opening may have a coating layer of a low-friction material.

Alternatively, a radial rolling bearing or radial sliding bearing can be provided between the cylindrical portion and the intermediate member and the other member.

In the assembled state of the rotation limiting device 4, the end axially one-sided protrusion 17 of the first member 14 circumferentially faces the intermediate one-sided abutment surface 32 and the intermediate other-sided abutment surface 33 of the intermediate member 16c on the other side in the axial direction. The intermediate axially one-sided protrusion 30 of the intermediate member 16c on the other side in the axial direction circumferentially faces the intermediate one-sided abutment surface 32 and the intermediate other-sided abutment surface 33 of the intermediate member 16b, which is in the axial center. The intermediate axially one-sided protrusion 30 of the axially central intermediate member 16b circumferentially faces the intermediate one-sided abutment surface 32 and the intermediate other-sided abutment surface 33 of the intermediate member 16a on the one side in the axial direction. Furthermore, the intermediate axially one-sided protrusion 30 of the intermediate member 16a on the one side in the axial direction faces the end one-sided abutment surface 23 and the end other-sided abutment surface 24 of the second member 15.

In other words, the end axially one-sided protrusion 17 of the first member 14 and the intermediate radial protrusion 29 of the intermediate member 16c on the other side in the axial direction, the intermediate axially one-sided protrusion 30 of the intermediate member 16c on the other side in the axial direction and the intermediate radial protrusion 29 of the axially central intermediate member 16b, the intermediate axially one-sided protrusion 30 of the axially central intermediate member 16b and the intermediate radial protrusion 29 of the intermediate member 16a on the one side in the axial direction, and the intermediate axially one-sided protrusion 30 of the intermediate member 16a on the one side in the axial direction and the end radial protrusion 27 of the second member 15 are respectively arranged so as to overlap with each other in the circumferential direction.

Here, in a vehicle incorporating the rotation limiting device 4 of the present example, a neutral position of the steering wheel 2, in which the pair of sterred wheels 5 are oriented in a staright direction, can be adjusted, for example, by operating the steering shaft 9 to the maximum right or left, and then operating the steering shaft 9 to the left or right by half the rotatable amount of the steering shaft 9. However, as long as the neutral position of the steering wheel 2 can be adjusted, the adjustment can be performed by any method, not limited to this method.

In the present example, the outer diameter of the end axially one-sided protrusion 17 of the first member 14 and the outer diameter of the intermediate axially one-sided protrusion 30 of each of the intermediate members 16a, 16b, 16c are the same as each other. In other words, the outer peripheral surface of the end axially one-sided protrusion 17 and the outer peripheral surface of the intermediate axially one-sided protrusion 30 are confgured by a cylindrical surface having an eqaul radius of curvature. Furthermore, in the assembled state of the rotation limiting device 4, the end axially one-sided protrusion 17 of the first member 14 and the intermediate axially one-sided protrusions 30 of the intermediate members 16a, 16b, 16c are arranged at the same radial position. Therefore, the width in the circumferential direction of the end axially one-sided protrusion 17 and the width in the circumferential direction of the intermediate axially one-sided protrusion 30 are the same.

Furthermore, in the present example, the end surface shape of the end radial protrusion 27 of the second member 15 when viewed from the axial direction and the end surface shape of the intermediate radial protrusion 29 of each of the intermediate members 16a, 16b, 16c when viewed from the axial direction are identical to each other. That is, the radius of curvature of the end one-sided abutment surface 23 and the end other-sided abutment surface 24 is the same as the radius of curvature of the intermediate one-sided abutment surface 32 and the intermediate other-sided abutment surface 33. Furthermore, in the assembled state of the rotation limiting device 4, the end radial protrusion 27 of the second member 15 and the intermediate radial protrusion 29 of each of the intermediate members 16a, 16b, 16c are arranged at the same radial position. Therefore, the width in the circumferential direction of the end radial protrusion 27 and the width in the circumferential direction of the intermediate radial protrusion 29 are the same.

The width in the circumferential direction of the axial protrusions 17, 30, that is, the angle θₐ between end portions on both sides in the circumferential direction of the axial protrusions 17, 30 with the central axis O of the rotation limiting device 4 as the center, and the width in the circumferential direction of the radial protrusions 27, 29, that is, the angle θᵣ between portions of the one-sided abutment surfaces 23, 32 and the other-sided abutment surfaces 24, 33 that contact the axial projections 17, 30 with the central axis O of the rotation limiting device 4 as the center are not particularly limited as long as the strength and rigidity can be ensured. For example, the sum of the θₐ and θᵣ can be set to be equal to or greater than 60 degrees and equal to or less than 120 degrees. In the illustrated example, the andgle θₐ is 10 degrees, and the andgle θᵣ is approximately 80 degrees.

In the present example, the radius of curvature of the one-sided abutment surfaces 23, 32 and the radius of curvature of the other-sided abutment surfaces 24, 33 are made larger than the radius of curvature of the outer peripheral surface of the end axially one-sided protrusion 17 and the radius of curvature of the outer peripheral surface of the intermediate axially one-sided protrusion 30. The radius of curvature of the one-sided abutment surfaces 23, 32 and the radius of curvature of the other-sided abutment surfaces 24, 33 are not particularly limited, but for example, in order to keep the surface pressure low during contact, they can be 110% or more of the radius of curvature of the outer peripheral surface of the end axially one-sided protrusion 17 and the radius of curvature of the outer peripheral surface of the intermediate axially one-sided protrusion 30, and it is preferable that they be 110% or more and 120% or less.

Furthermore, in the present example, a diameter Dₐ of a first imaginary circle centered on the center axis O of the rotation limiting device 4 and passing through the center axis Cₐ of the axial protrusions 17, 30 is made smaller than a diameter Dᵣ of a second imaginary circle centered on the center axis O of the rotation limiting device 4 and passing through the center of curvature of the one-sided abutment surfaces 23, 32 and the center of curvature Cᵣ of the other-sided abutment surfaces 24, 33 (Dₐ<Dᵣ).

### <Operation of Rotation Limiting Device 4>

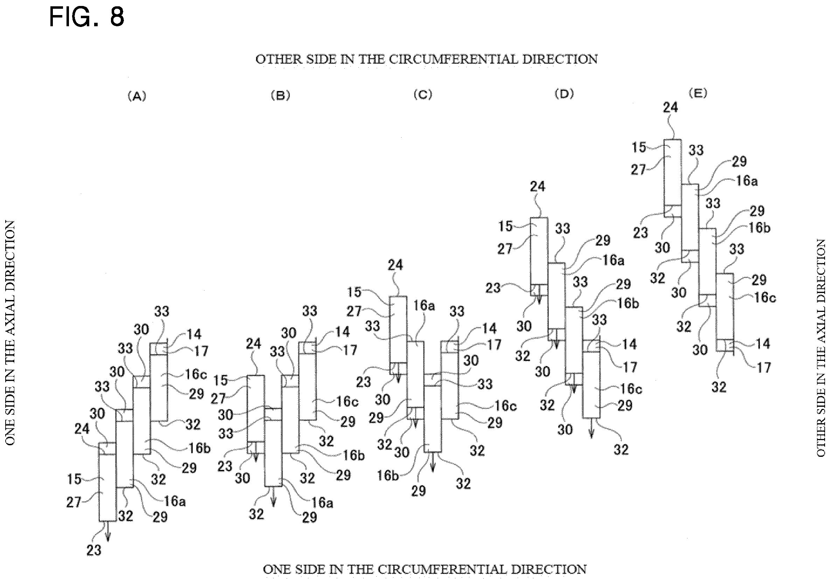

The operation of the rotation limiting device 4 of the present example will be described with reference to FIG. 8A to FIG. 9E. FIG. 8A to FIG. 9E are views schematically illustrating the end axially one-sided protrusion 17 of the first member 14, the end radial protrusion 27 of the second member 15, intermediate radial protrusions 29 and the intermediate axially one-sided protrusions 30 of the three intermediate members 16a, 16b, 16c, as viewed from the outside in the radial direction. In the following description, the one side in the circumferential direction refers to the front side in the counterclockwise direction as viewed from the driver seated in the driver's seat (as viewed from the other side in the axial direction), and refers to the lower side in FIG. 8A to FIG. 9E, and the other side in the circumferential direction refers to the front side in the clockwise direction as viewed from the driver seated in the driver's seat, and refers to the upper side in FIG. 8A to FIG. 9E.

When the steering wheel 2 is operated from the maximum right (the clockwise direction as viewed from the driver seated in the driver's seat, the other side in the circumferential direction) to the maximum left (the counterclockwise direction as viewed from the driver seated in the driver's seat, the one side in the circumferential direction), the rotation limiting device 4 operates as illustrated in the order of FIG. 8A, FIG. 8B, FIG. 8C, FIG. 8D, and FIG. 8E.

In a state where the steering wheel 2 is operated to the maximum right, as illustrated in FIG. 8A, the end other-sided abutment surface 24 of the second member 15 abuts against the intermediate axially one-sided protrusion 30 of the intermediate member 16a on the one side in the axial direction. The intermediate other-sided abutment surface 33 of the intermediate member 16a on the one side in the axial direction abuts against the intermediate axially one-sided protrusion 30 of the axially central intermediate member 16b. The intermediate other-sided abutment surface 33 of the axially central intermediate member 16b abuts against the intermediate axially one-sided protrusion 30 of the intermediate member 16c on the other side in the axial direction. Furthermore, the intermediate other-sided abutment surface 33 of the intermediate member 16c on the other side in the axial direction abuts against the axial protrusion 17 of the first member 14.

From this state, when the steering wheel 2 is operated to the left and the steering shaft 9 is rotated in the counterclockwise direction, as indicated by the arrow in FIG. 8A, while the intermediate other-sided abutment surface 33 of the intermediate member 16a on the one side in the axial direction abuts against the intermediate axially one-sided protrusion 30 of the axially central intermediate member 16b, the intermediate other-sided abutment surface 33 of the axially central intermediate member 16b abuts against the intermediate axially one-sided protrusion 30 of the intermediate member 16c on the other side in the axial direction, and the intermediate other-sided abutment surface 33 of the intermediate member 16c on the other side in the axial direction abuts against the axial protrusion 17, only the second member 15 rotates in the counterclockwise direction (toward the one side in the circumferential direction).

When the second member 15 rotates by an angle smaller by the sum of the width θᵣ in the circumferential direction of the end radial protrusion 27 and the width θₐ in the circumferential direction of the intermediate axially one-sided protrusion 30 than 360 degrees, in the present example by 270 degrees, as illustrated in FIG. 8B, the end one-sided abutment surface 23 abuts against the intermediate axially one-sided protrusion 30 of the intermediate member 16a on the one side in the axial direction.

When the steering wheel 2 is further operated to the left from the state illustrated in FIG. 8B, as indicated by the arrows in FIG. 8B, the end one-sided abutment surface 23 pushes the intermediate axially one-sided protrusion 30 of the intermediate member 16a on the one side in the axial direction toward the one side in the circumferential direction. As a result, the second member 15 and the intermediate member 16a on the one side in the axial direction rotate together in the counterclockwise direction (toward the one side in the circumferential direction).

When the second member 15 and the intermediate member 16a on the one side in the axial direction rotate in the counterclockwise direction by an angle smaller by the sum of the width θᵣ in the circumferential direction of the intermediate radial protrusion 29 of the intermediate member 16a on the one side in the axial direction and the width θₐ in the circumferential direction of the intermediate axially one-sided protrusion 30 of the axially central intermediate member 16b than 360 degrees, in the present example by 270 degrees, as illustrated in FIG. 8C, the intermediate one-sided abutment surface 32 of the intermediate member 16a on the one side in the axial direction abuts against the intermediate axially one-sided protrusion 30 of the axially central intermediate member 16b.

When the second member 15 and the intermediate member 16a on the one side in the axial direction rotate together in the counterclockwise direction by further operating the steering wheel 2 to the left from the state illustrated in FIG. 8C, as indicated by the arrows in FIG. 8C, the intermediate one-sided abutment surface 32 of the intermediate member 16a on the one side in the axial direction pushes the intermediate axially one-sided protrusion 30 of the axially central intermediate member 16b toward the one side in the circumferential direction. As a result, the second member 15 and the intermediate member 16a on the one side in the axial direction and the axially central intermediate member 16b rotate together in the counterclockwise direction (toward the one side in the circumferential direction).

When the second member 15 and the intermediate member 16a on the one side in the axial direction and the axially central intermediate member 16b rotate by an angle smaller by the sum of the width θᵣ in the circumferential direction of the intermediate radial protrusion 29 of the axially central intermediate member 16b and the width θₐ in the circumferential direction of the intermediate axially one-sided protrusion 30 of the intermediate member 16c on the other side in the axial direction than 360 degrees, in the present example by 270 degrees, as illustrated in FIG. 8D, the intermediate one-sided abutment surface 32 of the axially central intermediate member 16b abuts against the intermediate axially one-sided protrusion 30 of the intermediate member 16c on the other side in the axial direction.

When the second member 15 and the intermediate member 16a on the one side in the axial direction and the axially central intermediate member 16b rotate together in the counterclockwise direction by further operating the steering wheel 2 to the left from the state illustrated in FIG. 8D, as indicated by the arrows in FIG. 8D, the intermediate one-sided abutment surface 32 of the axially central intermediate member 16b pushes the intermediate axially one-sided protrusion 30 of the intermediate member 16c on the other side in the axial direction toward the one side in the circumferential direction. As a result, the second member 15 and the three intermediate members 16a, 16b, 16c rotate together in the counterclockwise direction (toward the one side in the circumferential direction).

When the second member 15 and the three intermediate members 16a, 16b, 16c rotate by an angle smaller by the sum of the width θᵣ in the circumferential direction of the intermediate radial protrusion 29 of the intermediate member 16c on the other side in the axial direction and the width θₐ in the circumferential direction of the end axially one-sided protrusion 17 of the first member 14 than 360 degrees, in the present example by 270 degrees, as illustrated in FIG. 8E, the intermediate one-sided abutment surface 32 of the intermediate member 16c on the other side in the axial direction abuts against the end axially one-sided protrusion 17 of the first member 14.

As a result, the intermediate member 16c on the other side in the axial direction is prevented from rotating further in the counterclockwise direction relative to the first member 14. When the counterclockwise rotation of the intermediate member 16c on the other side in the axial direction is prevented, the axially central intermediate member 16b is prevented from rotating further in the counterclockwise direction. When the counterclockwise rotation of the axially central intermediate member 16b is prevented, the intermediate member 16a on the one side in the axial direction is prevented from rotating further in the counterclockwise direction. Further, when the counterclockwise rotation of the intermediate member 16a on the one side in the axial direction is prevented, the second member 15 is prevented from rotating further in the counterclockwise direction, and the steering shaft 9 and the steering wheel 2 supported and fixed to the steering shaft 9 are prevented from rotating further in the counterclockwise direction.

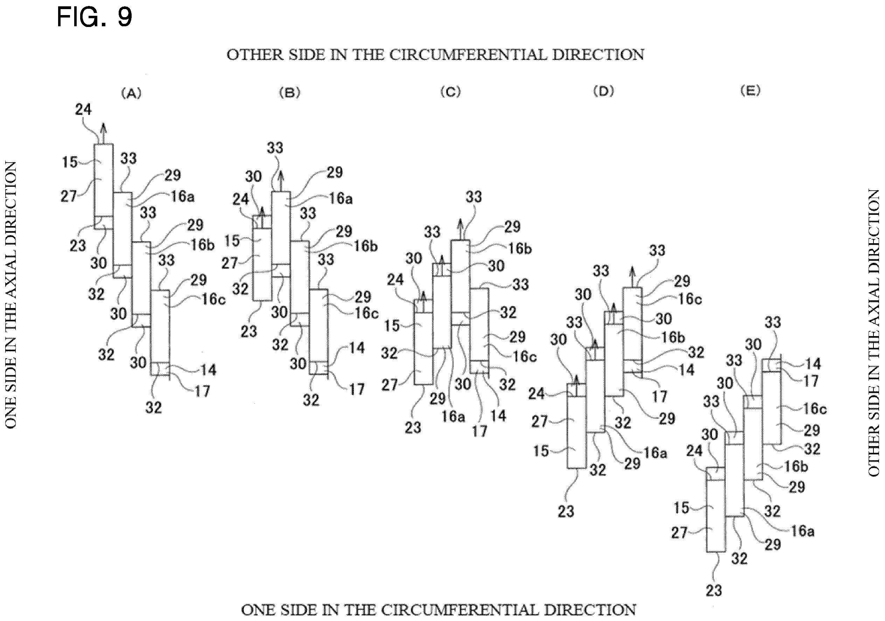

In contrast, when operating the steering wheel 2 from the maximum left to the maximum right, the rotation limiting device 4 operates as illustrated in the order of FIG. 9A, FIG. 9B, FIG. 9C, FIG. 9D, and FIG. 9E.

In a state where the steering wheel 2 is operated to the maximum left, as illustrated in FIG. 9A, the end one-sided abutment surface 23 of the second member 15 abuts against the intermediate axially one-sided protrusion 30 of the intermediate member 16a on the one side in the axial direction. The intermediate one-sided abutment surface 32 of the intermediate member 16a on the one side in the axial direction abuts against the intermediate axially one-sided protrusion 30 of the axially central intermediate member 16b. The intermediate one-sided abutment surface 32 of the axially central intermediate member 16b abuts against the intermediate axially one-sided protrusion 30 of the intermediate member 16c on the other side in the axial direction. Furthermore, the intermediate one-sided abutment surface 32 of the intermediate member 16c on the other side in the axial direction abuts against the axial protrusion 17 of the first member 14.

From this state, when the steering wheel 2 is operated to the right and the steering shaft 9 is rotated in the clockwise direction, as indicated by the arrow in FIG. 9A, while the intermediate one-sided abutment surface 32 of the intermediate member 16a on the one side in the axial direction abuts against the intermediate axially one-sided protrusion 30 of the axially central intermediate member 16b, the intermediate one-sided abutment surface 32 of the axially central intermediate member 16b abuts against the intermediate axially one-sided protrusion 30 of the intermediate member 16c on the other side in the axial direction, and the intermediate one-sided abutment surface 32 of the intermediate member 16c on the other side in the axial direction abuts against the axial protrusion 17, only the second member 15 rotates in the clockwise direction (toward the other side in the circumferential direction).

When the second member 15 rotates by an angle smaller by the sum of the width θᵣ in the circumferential direction of the end radial protrusion 27 and the width θₐ in the circumferential direction of the intermediate axially one-sided protrusion 30 of the intermediate member 16a on the one side in the axial direction than 360 degrees, in the present example by 270 degrees, as illustrated in FIG. 9B, the end other-sided abutment surface 24 abuts against the intermediate axially one-sided protrusion 30 of the intermediate member 16a on the one side in the axial direction.

When the steering wheel 2 is further operated to the right from the state illustrated in FIG. 9B, as indicated by the arrows in FIG. 9B, the end other-sided abutment surface 24 pushes the intermediate axially one-sided protrusion 30 of the intermediate member 16a on the one side in the axial direction toward the other side in the circumferential direction. As a result, the second member 15 and the intermediate member 16a on the one side in the axial direction rotate together in the clockwise direction (toward the other side in the circumferential direction).

When the second member 15 and the intermediate member 16a on the one side in the axial direction rotate in the clockwise direction by an angle smaller by the sum of the width θᵣ in the circumferential direction of the intermediate radial protrusion 29 of the intermediate member 16a on the one side in the axial direction and the width θₐ in the circumferential direction of the intermediate axially one-sided protrusion 30 of the axially central intermediate member 16b than 360 degrees, in the present example by 270 degrees, as illustrated in FIG. 9C, the intermediate other-sided abutment surface 33 of the intermediate member 16a on the one side in the axial direction abuts against the intermediate axially one-sided protrusion 30 of the axially central intermediate member 16b.

When the second member 15 and the intermediate member 16a on the one side in the axial direction rotate together in the clockwise direction by further operating the steering wheel 2 to the right from the state illustrated in FIG. 9C, as indicated by the arrows in FIG. 9C, the intermediate other-sided abutment surface 33 of the intermediate member 16a on the one side in the axial direction pushes the intermediate axially one-sided protrusion 30 of the axially central intermediate member 16b toward the other side in the circumferential direction. As a result, the second member 15 and the intermediate member 16a on the one side in the axial direction and the axially central intermediate member 16b rotates together in the clockwise direction (toward the other side in the circumferential direction).

When the second member 15 and the intermediate member 16a on the one side in the axial direction and the axially central intermediate member 16b rotate by an angle smaller by the sum of the width θᵣ in the circumferential direction and the width θₐ in the circumferential direction of the intermediate axially one-sided protrusion 30 of the intermediate member 16c on the other side in the axial direction than 360 degrees, in the present example by 270 degrees, as illustrated in FIG. 9D, the intermediate other-sided abutment surface 33 of the axially central intermediate member 16b abuts against the intermediate axially one-sided protrusion 30 of the intermediate member 16c on the other side in the axial direction.

When the second member 15 and the intermediate member 16a on the one side in the axial direction and the axially central intermediate member 16b rotate together in the clockwise direction by further operating the steering wheel 2 to the right from the state illustrated in FIG. 9D, as indicated by the arrows in FIG. 9D, the intermediate other-sided abutment surface 33 of the axially central intermediate member 16b pushes the intermediate axially one-sided protrusion 30 of the intermediate member 16c on the other side in the axial direction toward the other side in the circumferential direction. As a result, the second member 15 and the three intermediate members 16a, 16b, 16c rotate together in the clockwise direction (toward the other side in the circumferential direction).

When the second member 15 and the three intermediate members 16a, 16b, 16c rotate by an angle smaller than the sum of the width θᵣ in the circumferential direction of the intermediate radial protrusion 29 of the intermediate member 16c on the other side in the axial direction and the width θₐ in the circumferential direction of the end axially one-sided protrusion 17 of the first member 14 than 360 degrees, in the present example by 270 degrees, as illustrated in FIG. 9E, the intermediate other-sided abutment surface 33 of the intermediate member 16c on the other side in the axial direction abuts against the end axially one-sided protrusion 17 of the first member 14.

As a result, the intermediate member 16c on the other side in the axial direction is prevented from further rotating in the clockwise direction relative to the first member 14. When the intermediate member 16c on the other side in the axial direction is prevented from rotating in the clockwise direction, the axially central intermediate member 16b is prevented from further rotating in the clockwise direction. When the axially central intermediate member 16b is prevented from rotating in the clockwise direction, the intermediate member 16a on the one side in the axial direction is prevented from further rotating in the clockwise direction. Further, when the intermediate member 16a on the one side in the axial direction is prevented from rotating in the clockwise direction, the second member 15 is prevented from further rotating in the clockwise direction, and the steering shaft 9 and the steering wheel 2 supported and fixed to the steering shaft 9 is prevented from further rotating in the clockwise direction.

Here, when the steering shaft 9 rotates, the intermediate member 16a on the one side in the axial direction, the axially central intermediate member 16b, and/or the intermediate member 16c on the other side in the axial direction may rotate along with the second member 15 due to the frictional force acting between the second member 15 and the intermediate members 16a, 16b, 16c. In this case, the operational sequence of the rotation limiting device 4 may be different from the examples illustrated in FIG. 8A to FIG. 8E and FIG. 9A to FIG. 9E.

As in the present example, when the width in the circumferential direction of the end axially one-sided protrusion 17 and the width in the circumferential direction of the intermediate axially one-sided protrusion 30 are the same and the width in the circumferential direction of the end radial protrusion 27 and the width in the circumferential direction of the intermediate radial protrusion 29 are the same, the more the number of intermediate members 16a, 16b, 16c is increased by one, the more the rotatable amount of the steering shaft 9 is increased by an angle smaller by the sum of the width θₐ in the circumferential direction of the axial protrusions 17, 30 and the width θᵣ in the circumferential direction of the radial protrusions 27, 29 than 360 degrees, in the present example by 270 degrees. On the contrary, the more the number of intermediate members 16a, 16b, 16c is decreased by one, the more the rotatable amount of the steering shaft 9 is decreased by an angle smaller by the sum of the width in the circumferential direction of the axial protrusions 17, 30 and the width in the circumferential direction of the radial protrusions 27, 29 than 360 degrees, in the present example by 270 degrees.

Here, the sum of the width θₐ in the circumferential direction of the axial protrusions 17, 30 and the width θᵣ in the circumferential direction of the radial protrusions 27, 29 is the same as the angle between the center axis of the axial protrusions 17, 30 in a state where the axial protrusions 17, 30 abut against the one-sided abutment surfaces 23, 32, and the center axis of the axial protrusions 17, 30 in a state where the axial protrusions 17, 30 abut against the other-sided abutment surfaces 24, 33.

As described above, with the rotation limiting device 4 of the present example, the rotatable amount of the steering shaft 9 can be adjusted by changing the number of intermediate members 16a, 16b, 16c, so that the degrees of freedom in setting the rotatable amount of the steering shaft 9 can be improved.

In particular, in the rotation limiting device 4 of the present example, the intermediate members 16a, 16b, 16c all have an equal shape. In short, in the rotation limiting device of the present disclosure, the rotatable amount of the rotating member can be adjusted by increasing or decreasing the number of the intermediate members having an equal shape. As a result, with the rotation limiting device of the present disclosure, the manufacturing cost, management cost, and assembly cost of the components can be prevented from increasing unnecessarily, and the increase in the manufacturing cost of the rotation limiting device can be suppressed.

In the present example, the width in the circumferential direction of the end axially one-sided protrusion 17 of the first member 14 and the width in the circumferential direction of the intermediate axially one-sided protrusions 30 of all intermediate members 16a, 16b, 16c are the same, and the width in the circumferential direction of the end radial protrusion 27 of the second member 15 and the width in the circumferential direction of the intermediate radial protrusion 29 of all of the intermediate members 16a, 16b, 16c are the same. However, in a case of carrying out the present disclosure, the width in the circumferential direction of the end axially one-sided protrusion of the first member and the width in the circumferential direction of the intermediate axially one-sided protrusion of at least one intermediate member can be made different from each other. Additionally or alternatively, the width in the circumferential direction of the end radial protrusion of the second member and the width in the circumferential direction of at least one intermediate radial protrusion can be made different from each other.

For example, in the rotation limiting device 4 of the present example, the rotatable amount of the steering shaft 9 can also be adjusted by making the width in the circumferential direction of the end radial protrusion 27 different from the width in the circumferential direction of the intermediate radial protrusion 29.

In the present example, the width in the circumferential direction of all of the axial protrusions 17, 30 is 10 degrees, and the width in the circumferential direction of all of the radial protrusions 27, 29 is 80 degrees, so that the rotatable amount of the steering shaft 9 is 1080 degrees. In contrast, if the width in the circumferential direction of the axial protrusions 17, 30 is 10 degrees, the width in the circumferential direction of the intermediate radial protrusion 29 of the three intermediate members 16a, 16b, 16c is 80 degrees, and the width in the circumferential direction of the end radial protrusion 27 is approximately 70 degrees, the rotatable amount of the steering shaft 9 can be 1090 degrees.

Furthermore, if the steering wheel 2 is further operated to the right or left with an excessively large force in a state where the steering wheel 2 is operated to the maximum right or left, the rotation limiting device 4 may be destroyed and become unable to use. Therefore, in order of stabilize the destructive load at which the rotation limiting device 4 becomes unable to use, the width in the circumferential direction of any one of the axial protrusion of the end axially one-sided protrusion 17 of the first member 14 and the intermediate axially one-sided protrusion 30 of the respective intermediate members 16a, 16b, 16c can be made smaller than the width in the circumferential direction of the remaining axial protrusions.

Furthermore, in the rotation limiting device 4 of the present example, the intermediate axially one-sided protrusion 30 of the respective intermediate members 16a, 16b, 16c protrudes only toward the one side in the axial direction. Therefore, the structure can be simplified compared to a case in which intermediate members has a protrusion that protrudes toward both sides in the axial direction, and the manufacturing cost can be suppressed.

That is, each of the intermediate members 16a, 16b, 16c can be integrally manufactured by pressing. Alternatively, each of the intermediate members 16a, 16b, 16c can also be manufactured by supporting and fixing a columnar shaped pin to a flat plate shaped member having a base portion 31 and an intermediate radial protrusion 29. In this case, the flat plate shaped member and the pin can be made of the same material or can be made of different materials. For example, if the flat plate shaped member is made of a metal material and the pin is made of a synthetic resin, the strength and rigidity of the intermediate members can be ensured while reducing the impact noise generated when the rotation limiting device is in use.

In contrast, when the intermediate members have a protrusion that protrudes toward both sides in the axial direction respectively, it is difficult to manufacture the intermediate members by pressing, and it will be necessary to manufacture the intermediate members by cutting. Therefore, the manufacturing cost may be increased. Furthermore, in a case where the flat plate shaped member and the pin are manufactured so as to be combined, it is necessary to precisely control the amount of press fitting of the pin, which could make the assembly process more laborious.

When each of the intermediate members 16a, 16b, 16c is configured by joining and fixing the flat plate shaped member and the pin, as in a variation of the first member 14 illustrated in FIG. 10, a pin flange may be provided at an end portion on the other side in the axial direction of the pin.

In the rotation limiting device 4 of the present example, the three intermediate members 16a, 16b, 16c and the first member 14 are held in the axial direction between the flange portion 26 of the second member 15 and the retaining ring 34. Therefore, even in a state before supporting and fixing the first member 14 to the steering column 8 and joining and fixing the second member 15 to the steering shaft 9, the rotation limiting device 4 can be assembled in advance (pre-assembled). As a result, the handling of rotation limiting device 4 can be improved.

Furthermore, with the rotation limiting device 4 of the present example, there is no need to increase the connection strength in the axial direction of the first member 14 relative to the steering shaft 9 and the connection strength in the axial direction of the second member 15 relative to the steering column 8.

That is, in the stopper unit 100 of the conventional configuration illustrated in FIG. 20, each of the side surfaces on both sides in the circumferential direction of the first rotating protrusion 104, the side surfaces on both sides in the circumferential direction of the fixed protrusion 105, and the side surfaces on both sides in the circumferential direction of the second rotating protrusion 107 are inclined relative to the axial direction when viewed from the outside in the radial direction. Therefore, when the first rotating member 101 rotates, a force is applied between the first rotating member 101 and the second rotating member 103 and/or the second rotating member 103 and the housing 102 in a direction away from each other with respect to the axial direction. As a result, the connection strength in the axial direction of the first rotating member 101 relative to the steering shaft and the connection strength in the axial direction of the housing 102 relative to the vehicle body are required to be sufficiently high.

On the other hand, in the present example, each of the outer peripheral surface of the end axially one-sided protrusion 17, the end one-sided abutment surface 23 and the end other-sided abutment surface 24, the outer peripheral surface of the intermediate axially one-sided protrusion 30, and the intermediate one-sided abutment surface 32 and the intermediate other-sided abutment surface 33 extend linearly in the axial direction when viewed from the radial direction. Therefore, even when the first member 14 rotates due to rotation of the steering shaft 9, no axial force acts between the second member 15 and the intermediate member 16a on the one side in the axial direction, the intermediate member 16c on the other side in the axial direction and the first member 14, or between adjacent intermediate members 16a, 16b, 16c. Therefore, the connection strength in the axial direction of the first member 14 relative to the steering column 8, and the connection strength in the axial direction of the second member 15 relative to the steering shaft 9, are not required to be unnecessarily high, thus preventing the manufacturing cost of the steering device 1, including the rotation limiting device, from being unnecessarily increased.

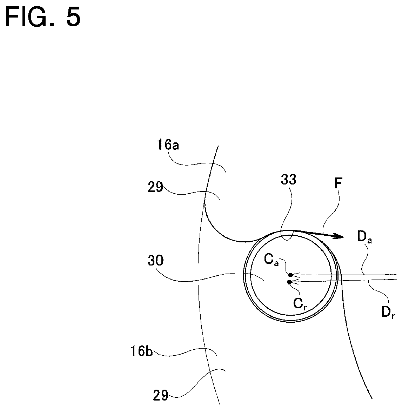

Furthermore, in the present example, the diameter Dₐ of the first imaginary circle is set smaller than the diameter Dᵣ of the second imaginary circle (Dₐ<Dᵣ). Therefore, when the end axially one-sided protrusion 17 or the intermediate axially one-sided protrusion 30 collides with the intermediate one-sided abutment surface 32 or the intermediate other-sided abutment surface 33, a force F (see FIG. 5) in a direction pressing the intermediate radial protrusion 29 toward the inside in the radial direction can be applied to the intermediate members 16a, 16b, 16c. That is, the portions that are pressed toward the inside in the radial direction when the axial protrusions 17, 30 collide with the intermediate one-sided abutment surface 32 or the intermediate other-sided abutment surface 33 can be portions having a large thickness in the radial direction, and the strength of the intermediate members 16a, 16b, 16c can be easily ensured.

As long as the strength of the intermediate members can be sufficiently ensured, the diameter of the first imaginary circle can be the same as the diameter of the second imaginary circle, or can be larger than the diameter of the second imaginary circle.

In the rotation limiting device 4 of the present example, the three intermediate members 16a, 16b, 16c and the first member 14 are externally fitted without looseness to the cylindrical portion 25 of the second member 15 so as to be capable of relative rotation. That is, in the present example, the coaxiality between the first member 14 and the second member 15 is ensured by the fitting portion between the circular opening 20 of the first member 14 and the cylindrical portion 25 of the second member 15.

However, when the coaxiality between the first member 14 and the second member 15 can be ensured by positioning the first first member 14 in the radial direction relative to the steering column 8 at the fixed portion between the first member 14 and the steering column 8 and positioning the second member 15 in the radial direction relative to the steering shaft 9 at the fixed portion between the second member 15 and the steering shaft 9, the circular opening 20 of the first member 14 and the cylindrical portion 25 of the second member 15 can also be fitted with a clearance fit with looseness. As a result, the rotational resistance of the steering shaft 9 can be maintained almost constant.

In the present example, the first member 14 is supported and fixed to the steering column 8 that does not rotate even during use, and the second member 15 is supported and fixed to the steering shaft 9 that rotates during use. However, in a case of carrying out the present disclosure, the second member can be supported and fixed to a fixed member that does not rotate during use, and the first member can be supported and fixed to a fixed member that rotates during use.

In a case of carrying out the present disclosure, the materials configuring the first member, the second member, and the intermediate member are not particularly limited as long as they are capable of rotating (sliding) relative to each other, and can be made of, for example, synthetic resin or metal material. Furthermore, the first member, the second member, and the intermediate member can also be integrally configured as a single body, or can be configured by combining a plurality of components.

The base plate and the pin of the first member can be made of the same material, or can be made of different materials. For example, if the base plate is made of a metal material and the pin is made of a synthetic resin, the strength and rigidity of the first member can be ensured while reducing the impact noise generated when the rotation limiting device is in use.

Furthermore, in the present example, an example has been described in which the rotation limiting device 4 is incorporated into the steering unit 3 configuring a steer-by-wire steering device 1. However, the rotation limiting device of the present disclosure can be incorporated and used in order to limit the rotatable amount of a rotating member not only in steer-by-wire steering devices, but also in steering devices in which a steering unit and a turning unit are mechanically connected, or in arbitrary rotary mechanical devices.

Furthermore, in a case of carrying out the present example, a cover can be provided to cover the flange portion 26 and the end radial protrusion 27 of the second member 15 and the intermediate members 16a, 16b, 16c from the outside in the radial direction in order to prevent the intrusion of foreign matter such as dust and rainwater. In this case, for example, a cover can be provided so as to protrude from the surface on the one side in the axial direction of the base plate 18 of the first member 14 toward the one side in the axial direction.

### [Second Example]

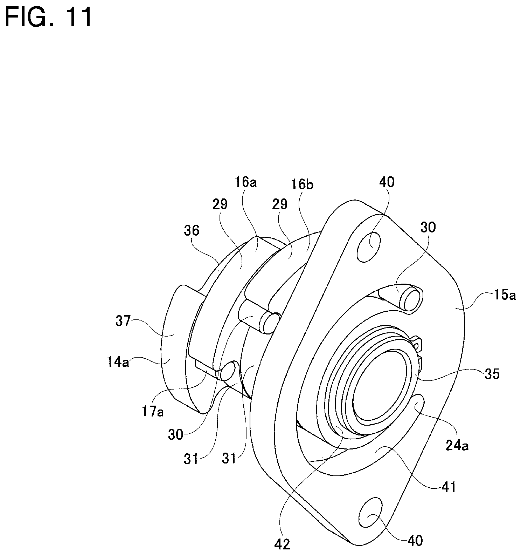

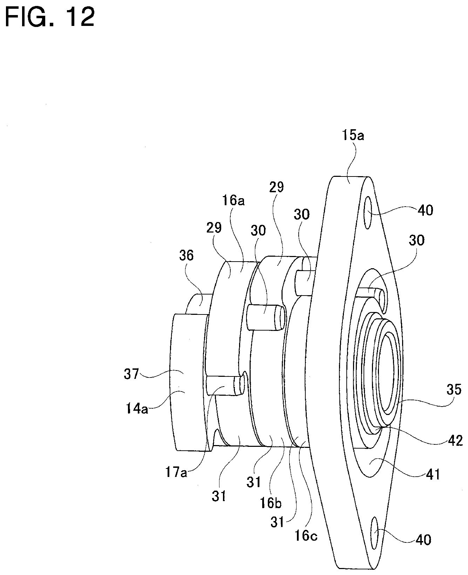

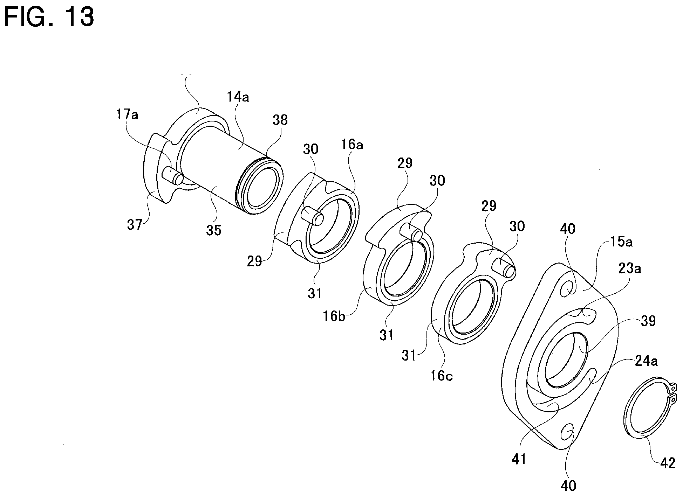

A second example of an embodiment according to the present disclosure will be described with reference to FIG. 11 to FIG. 13. The rotation limiting device 4a of the present example includes a first member 14a, a second member 15a, and three intermediate members 16a, 16b, 16c.

The first member 14a has an end axially one-sided protrusion 17a at a location deviated in the radial direction from a center axis thereof that protrudes toward one side in the axial direction (the right side in FIG. 11 to FIG. 13).

In the present example, the first member 14a includes a cylindrical portion 35, a flange portion 36, a radial protrusion 37, and an end axially one-sided protrusion 17a.

The cylindrical portion 35 has a locking groove 38 over the whole circumference on an outer peripheral surface of an end portion on the one side in the axial direction.

The flange portion 36 protrudes from an outer peripheral surface of an end portion on the other side in the axial direction (the left side in FIG. 11 to FIG. 13) of the cylindrical portion 35 toward the outside in the radial direction over the whole circumference.

The radial protrusion 37 has a substantialy fan-shaped end surface shape when viewed from the axial direction, and protrudes from one part in the circumferential direction of the flange portion 36 toward the outside in the radial direction.

The end axially one-sided protrusion 17a has a columnar shape, and protrudes from the center position in the circumferential direction of the radial protrusion 37 toward the one side in the axial direction.

The second member 15a has an end one-sided abutment surface 23a facing one side in the circumferential direction and an end other-sided abutment surface 24a facing the other side in the circumferential direction, and is arranged coaxially with the first member 14a and so as to be capable of rotating relative to the first member 14a.

In the present example, the second member 15a has an end surface shape that is substantially diamond-shaped when viewed from the axial direction. The second member 15a has a circular opening 39 penetrating in the axial direction in the central portion thereo, and has installation holes 40 penetrating in the axial direction at end portions on both sides in the long diagonal direction (left and right direction in FIG. 3).

Furthermore, the second member 15a has a groove portion 41 that opens at least on a surface on the other side in the axial direction around the circular opening 39. In the present example, the groove portion 41 is configured by a through hole penetrating the second member 15a in the axial direction. However, the groove portion can also be configured by a concave groove that is open only to the surface on the other side in the axial direction of the second member.

The second member 15a of the present example has an end one-sided abutment surface 23a on a surface facing one side in the circumferential direction of an inner surface of the groove portion 41, and an end other-sided abutment surface 24a on a surface facing the other side in the circumferential direction of the inner surface of the groove portion 41.

The rotation limiting device 4a is configured by combining the first member 14a, the second member 15a, and the three intermediate members 16a, 16b, 16c so as to be capable of relative rotation against each other. More specifically, the cylindrical portion 35 of the first member 14a is fitted into the circular opening 39 of the second member 15a and intermediate circular openings 43 of the three intermediate members 16a, 16b, 16c so as to be capable of relative rotation. A partially cylindrical retaining ring 42 is locked to the locking groove 38 formed on the outer peripheral surface of the end portion on the one side in the axial direction of the cylindrical portion 35, that protrudes more to the one side in the axial direction than the surface on the one side in the axial direction of the second member 15a.

In the assembled state of the rotation limiting device 4a, the end axially one-sided protrusion 17a of the first member 14a circumferentially faces the intermediate one-sided abutment surface 32 and the intermediate other-sided abutment surface 33 of the intermediate member 16a on the other side in the axial direction. The intermediate axially one-sided protrusion 30 of the intermediate member 16a on the other side in the axial direction circumferentially faces the intermediate one-sided abutment surface 32 and the intermediate other-sided abutment surface 33 of the axially central intermediate member 16b. The intermediate axially one-sided protrusion 30 of the axially central intermediate member 16b circumferentially faces the intermediate one-sided abutment surface 32 and the intermediate other-sided abutment surface 33 of the intermediate member 16c on the one side in the axial direction. Furthermore, the intermediate axially one-sided protrusion 30 of the intermediate member 16c on the one side in the axial direction faces the end one-sided abutment surface 23a and the end other-sided abutment surface 24a of the second member 15a.

In other words, the end axially one-sided protrusion 17a of the first member 14a and the intermediate radial protrusion 29 of the intermediate member 16a on the other side in the axial direction, the intermediate axially one-sided protrusion 30 of the intermediate member 16a on the other side in the axial direction and intermediate radial protrusion 29 of the axially central intermediate member 16b, and the intermediate axially one-sided protrusion 30 of the axially central intermediate member 16b and the intermediate radial protrusion 29 of the intermediate member 16c on the one side in the axial direction are arranged so as to overlap in the circumferential direction respectively, and the intermediate axially one-sided protrusion 30 of the intermediate member 16c on the one side in the axial direction is arranged inside the groove portion 41 of the second member 15a.

In the present example, the second member 15a is configured that the groove portion 41 is formed in a plate material and as a result that the end one-sided abutment surface 23a and the end other-sided abutment surface 24a are provided. For this reason, it is easier to reduce the weight of the rotation limiting device 4a.

The shape of an intermediate portion in the circumferential direction of the groove portion 41 can be any shape, as long as the accuracy of end portions on both sides in the circumferential direction, that are provided with the end one-sided abutment surface 23a and the end other-sided abutment surface 24a can be sufficiently ensured and interference with the axial protrusion 30 of the intermediate member 16c on the one side in the axial direction can be prevented.

In a case of carrying out the present example, a cover can be provided to cover the flange portion 36 and the radial protrusion 37 of the first member 14a and each of the intermediate members 16a, 16b, 16c from the outside in the radial direction. In this case, the cover can be provided so as to protrude from the surface on the other side in the axial direction of the second member 15a toward the other side in the axial direction.

The configuration and operational effects of the other parts of the second example are the same as those of the first example.

### [Third Example]

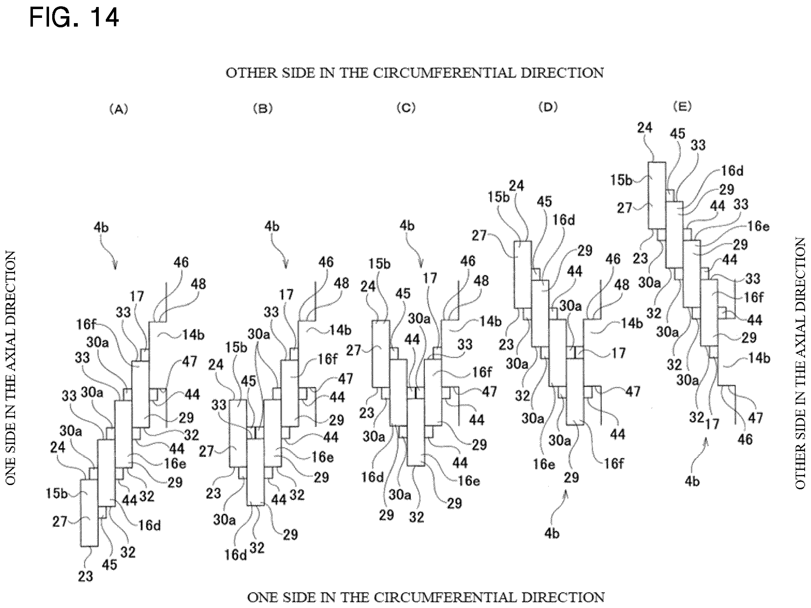

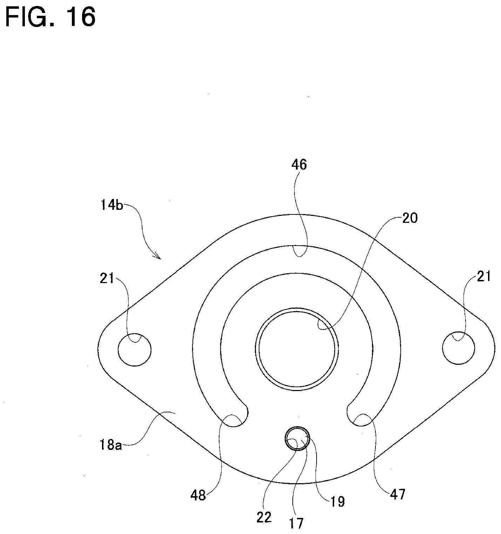

A third example of an embodiment according to the present disclosure will be described with reference to FIG. 14A to FIG. 16. The rotation limiting device 4a includes a first member 14b, a second member 15b, and a plurality of intermediate members 16d, 16e, 16f. In the present example, the plurality of intermediate members 16d, 16e, 16f are configured by three intermediate members 16d, 16e, 16.

Of the intermediate members 16d, 16e, 16f, the remaining intermediate members 16d, 16e except for the intermediate member 16f which is the farthest on the other side in the axial direction have an intermediate radial protrusion 29 protruding toward the outside in the radial direction, and an intermediate axially one-sided protrusion 30a protruding from a surface on the one side in the axial direction of the intermediate radial protrusion 29 toward the one side in the axial direction, in addition, an intermediate axially other-sided protrusion 44 that protrudes from a surface on the other side in the axial direction of the intermediate radial protrusion 29 toward the other side in the axial direction.

In the present example, the intermediate member 16f which is the farthest on the other side in the axial direction has an intermediate radial protrusion 29 protruding toward the outside in the radial direction, and an intermediate axially one-sided protrusion 30a that protrudes from a surface on the one side in the axial direction of the intermediate radial protrusion 29 toward the one side in the axial direction, in addition, an intermediate axially other-sided protrusion 44 protruding from a surface on the other side in the axial direction of the intermediate radial protrusion 29 toward the other side in the axial direction.

That is, all of the intermediate members 16d, 16e, 16f have the intermediate radial protrusion 29, the intermediate axially one-sided protrusion 30a , and the intermediate axially other-sided protrusion 44 respectively.

In the present example, the intermediate members 16d, 16e, 16f have the same shape. Furthermore, each of the intermediate members 16d, 16e, 16f has a shape symmetrical wih respect to the axial direction, and has a shape symmetrical wih respect to an imaginary flat plane that includes a center axis thereof and passes through the center position in the circumferential direction of the intermediate radial protrusion 29.

The intermediate axially one-sided protrusion 30a protrudes from the center position in the circumferential direction of the surface on the one side in the axial direction of the intermediate radial protrusion 29 toward the one side in the axial direction, the intermediate axially other-sided protrusion 44 protrudes from the center position in the circumferential direction of the surface on the other side in the axial direction of the intermediate radial protrusion 29 toward the other side in the axial direction. That is, the intermediate axially one-sided protrusion 30a and the intermediate axially other-sided protrusion 44 are arranged coaxially.

The second member 15b has an end axially other-sided protrusion 45 at a location deviated in the radial direction from a center axis thereof, which protrudes toward the other side in the axial direction and circumferentially faces the intermediate one-sided abutment surface 32 and the intermediate other-sided abutment surface 33 of the intermediate member 16d which is the farthest on the one side in the axial direction.

In the present example, the end axially other-sided protrusion 45 protrudes from the center position in the circumferential direction of a surface on the other side in the axial direction of the end radial protrusion 27 toward the other side in the axial direction.

The first member 14b has an end axially one-sided protrusion 17 as well as a cut-out portion 46 to which the intermediate axially other-sided protrusion 44 of the intermediate member 16f which is the farthest on the other side in the axial direction is arranged so as to allow rotation of the intermediate member 16f which is the farthest on the other side in the axial direction relative to the first member 14b.

In the present example, the first member 14b is configured by joining and fixing a base plate 18a and a pin 19.

The base plate 18a has a circular opening 20, installation holes 21, a press-fit hole 22, in addition, the base plate 18a further has the cut-out portion 46.

The cut-out portion 46 is configured by a through hole penetrating the base plate 18a in the axial direction around the circular opening 20 and in a portion that is deviated in the circumferential direction from the press-fit hole 22.

In the present example, an end one-sided abutment surface 47 is provided on a surface facing one side in the circumferential direction of the cut-out portion 46, and an end other-sided abutment surface 48 is provided on a surface facing the other side in the circumferential direction of the cut-out portion 46.

An end portion on the other side in the axial direction of the pin 19 is press-fitted into the press-fit hole 22. The end axially one-sided protrusion 17 is configured by a portion on the one side in the axial direction of the pin 19 that protrudes toward the one side in the axial direction from a surface on the one side in the axial direction of the base plate 18a.

Each of the end axially one-sided protrusion 17, the end axially other-sided protrusion 45, and the intermediate axially one-sided protrusion 30a and the intermediate axially other-sided protrusion 44 has a dimension in the axial direction that is less than half the thickness in the axial direction of the intermediate radial protrusion 29.

In the present example, the dimension in the axial direction of the end axially one-sided protrusion 17, the dimension in the axial direction of the end axially other-sided protrusion 45, and the dimension in the axial direction of each of the intermediate axially one-sided protrusion 30a and the intermediate axially other-sided protrusion 44 are the same.

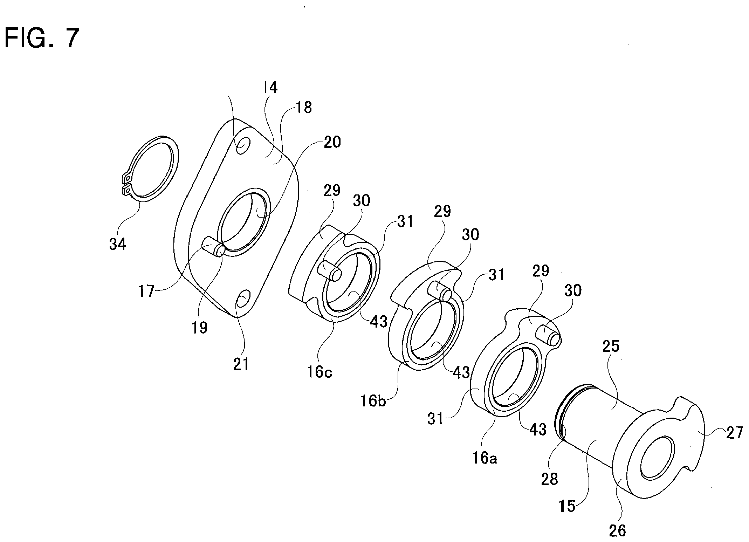

In the rotation limiting device 4b of the present example, the first member 14b and the three intermediate members 16d, 16e, 16f are externally fitted around the cylindrical portion 25 of the second member 15b (see FIG. 6 and FIG. 7) without looseness so as to be capable of relative rotation. In other words, the cylindrical portion 25 of the second member 15b is inserted through the circular opening 20 of the first member 14b and the intermediate circular openings 43 of the three intermediate members 16d, 16e, 16f. A retaining ring 42 locked to an end portion on the one side in the axial direction of the cylindrical portion 35 prevents the first member 14b and the intermediate members 16d, 16e, 16f from being displaced in the axial direction relative to the second member 15b.

In the assembled state of the rotation limiting device 4b, the end axially one-sided protrusion 17a of the first member 14b circumferentially faces a portion on the other side in the axial direction of the intermediate one-sided abutment surface 32 and a portion on the other side in the axial direction of intermediate other-sided abutment surface 33 of the other side in the axial direction of the intermediate member 16f.

The intermediate axially other-sided protrusion 44 of the intermediate member 16f on the other side in the axial direction is arranged inside the cut-out portion 46 of the first member 14b, and circumferentially faces the end one-sided abutment surface 47 and the end other-sided abutment surface 48. Furthermore, the intermediate axially one-sided protrusion 30 of the intermediate member 16f on the other side in the axial direction circumferentially faces a portion on the other side in the axial direction of the intermediate one-sided abutment surface 32 and a portion on the other side in the axial direction of the axially central intermediate other-sided abutment surface 33 of the axially central intermediate member 16e.

The intermediate axially other-sided protrusion 44 of the axially central intermediate member 16e circumferentially faces a portion on the one side in the axial direction of the intermediate one-sided abutment surface 32 and a portion on the one side in the axial direction of the intermediate other-sided abutment surface 33 of the intermediate member 16f on the other side in the axial direction. Furthermore, the intermediate axially one-sided protrusion 30 of the axially central intermediate member 16f circumferentially faces a portion on the other side in the axial direction of the intermediate one-sided abutment surface 32 and a portion on the other side in the axial direction of the intermediate other-sided abutment surface 33 of the intermediate member 16d on the one side in the axial direction.

The intermediate axially other-sided protrusion 44 of the intermediate member 16d on the one side in the axial direction circumferentially faces a portion on the one side in the axial direction of the intermediate one-sided abutment surface 32 and a portion on the one side in the axial direction of the intermediate other-sided abutment surface 33 of the axially central intermediate member 16e. Furthermore, the intermediate axially one-sided protrusion 30 of the intermediate member 16d on the one side in the axial direction faces the end one-sided abutment surface 23 and the end other-sided abutment surface 24 of the second member 15b.

The end axially other-sided protrusion 45 of the second member 15b circumferentially faces a portion on the one side in the axial direction of the intermediate one-sided abutment surface 32 and a portion on the one side in the axial direction of the intermediate other-sided abutment surface 33 of the intermediate member 16d on the one side in the axial direction.

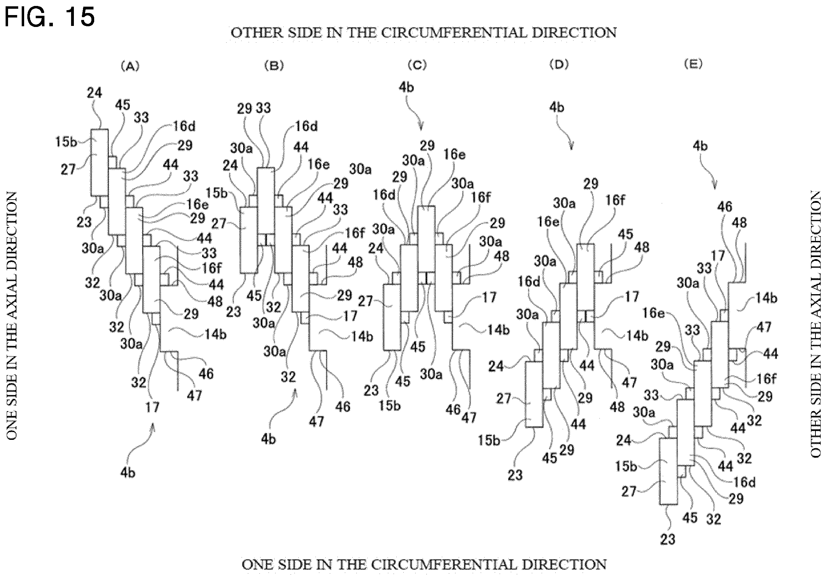

When the steering wheel 2 (see FIG. 1) is operated from the maximum right to the maximum left, the rotation limiting device 4b of the present example operates as illustrated in order of FIG. 14A, FIG. 14B, FIG. 14C, FIG. 14D, and FIG. 14E. Furthermore, when the steering wheel 2 is operated from the maximum left to the maximum right, the rotation limiting device 4b of the present example operates as illustrated in order of FIG. 15A, FIG. 15B, FIG. 15C, FIG. 15D, and FIG. 15E.

In the rotation limiting device 4b of the present example, members adjacent in the axial direction, that is, the first member 14b and the intermediate member 16f on the other side in the axial direction, the intermediate member 16f on the other side in the axial direction and the axially central intermediate member 16e, the axially central intermediate member 16e and the intermediate member 16d on the one side in the axial direction, and the intermediate member 16d on the one side in the axial direction and the second member 15d respectively abut against each other at two locations in the circumferential direction. As a result, a force in the circumferential direction applied to each member can be effectively distributed. Furthermore, even if some of the protrusions are damaged, the function of limiting the number of lock-to-lock rotations can be maintained. That is, the redundancy of the rotation limiting device 4b can be ensured.

In a case of carrying out the rotation limiting device according to an aspect of the present disclosure, the intermediate axially other-sided protrusion of the intermediate member which is the farthest on the other side in the axial direction can be omitted. In this case, the cut-out portion of the first member can be omitted.

The configuration and operational effects of the other parts of the third example are the same as those of the first example.

### [Fourth Example]

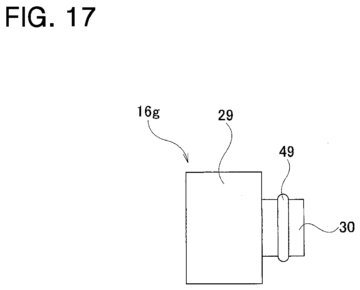

A fourth example of an embodiment according to the present disclosure will be described with reference to FIG. 17 to FIG. 18B. The basic structure of the rotation limiting device of the present example is not limited to this, but the structure of the first example, the second example, or the third example can be adopted.

The rotation limiting device of the present example is characterized in that it includes a cylindrical elastic ring 49 that is externally fitted around an intermediate axially one-sided protrusion 30 of an intermediate member 16g. For example, the elastic ring 49 can be configured by an O-ring having a circular cross-sectional shape. In the present example, the elastic ring 49 is externally fitted around an intermediate portion in the axial direction of the intermediate axially one-sided protrusion 30.

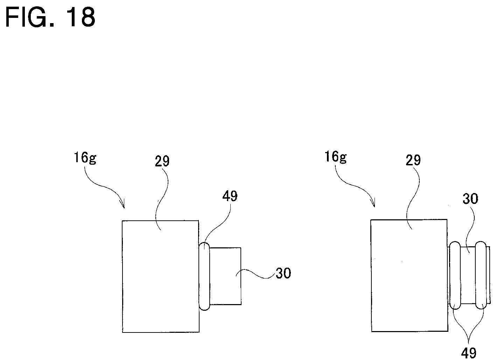

In a case of carrying out the present disclosure, the externally fitting position, the number, the cross-sectional shape, and the like of the elastic ring 49 are not particularly limited. For example, as illustrated in FIG. 18A, the elastic ring 49 can be externally fitted around the end portion on the other side in the axial direction of the intermediate axially one-sided protrusion 30, and as illustrated in FIG. 18B, two elastic rings 49 can be externally fitted around the intermediate axially one-sided protrusion 30.

Furthermore, a locking groove to lock the elastic ring can be formed on an outer peripheral surface of the intermediate axially one-sided protrusion.

With the present example, the impact noise generated when the intermediate axially one-sided protrusion 30 of the intermediate member 16g collides with the intermediate one-sided abutment surface 32 or the intermediate other-sided abutment surface 33 of the intermediate member adjacent on the one side in the axial direction, or with the end one-sided abutment surface 23 or the end other-sided abutment surface 24 of the second member 15, can be suppressed to be small.

In a case of carrying out the present disclosure, in addition to or instead of the intermediate axially one-sided protrusion, the elastic ring may also be externally fitted onto the end axially one-sided protrusion. Furthermore, in a case where the intermediate member includes the intermediate axially other-sided protrusion, the elastic ring may also be externally fitted onto the intermediate axially other-sided protrusion.

The configuration and operational effects of the other parts of the fourth example are the same as those of the first example to the third example.

### [Fifth Example]

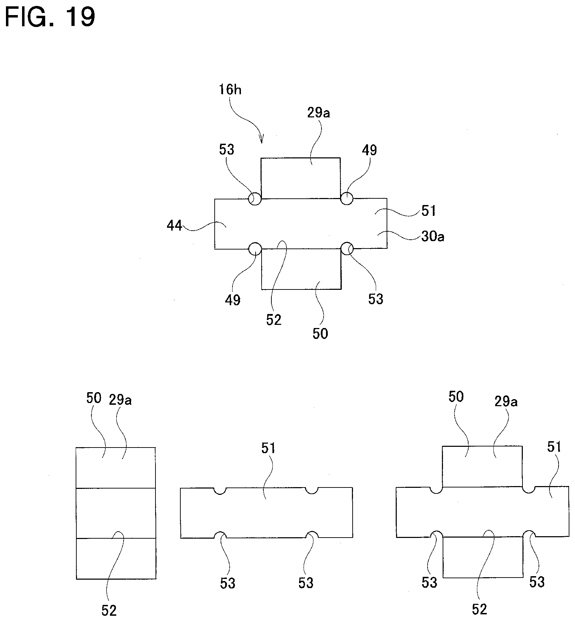

A fifth example of an embodiment according to the present disclosure will be described with reference to FIG. 19A to FIG. 19C.

In the present example, an intermediate member 16h has an intermediate radial protrusion 29a protruding toward the outside in the radial direction, an intermediate axially one-sided protrusion 30a protruding from a surface on the one side in the axial direction of the intermediate radial protrusion 29a toward the one side in the axial direction, and an intermediate axially other-sided protrusion 44 protruding from a surface on the other side in the axial direction of the intermediate radial protrusion 29a toward the other side in the axial direction.

An elastic ring 49 is externally fitted around an end portion on the other side in the axial direction of the intermediate axially one-sided protrusion 30a and an end portion on the one side in the axial direction of the intermediate axially other-sided protrusion 44 respectively.

As a result, the impact noise generated when the intermediate axially one-sided protrusion 30a or the intermediate axially other-sided protrusion 44 of the intermediate member 16h collides with other members can be suppressed to be small.

The intermediate member 16h is configured by joining and fixing a base plate 50 and a pin 51.

The intermediate radial protrusion 29a protrudes toward the outside in the radial direction from one part in the circumferential direction of the base portion 31 of the base plate 50, and has a through hole 52 that penetrates the center position in the circumferential direction in the axial direction.

The intermediate axially one-sided protrusion 30a and the intermediate axially other-sided protrusion 44 are configured by inserting the pin 51 into a through hole 52.

The pin 51 has a columnar shape, and has locking grooves 53 at two locations in an intermediate portion in the axial direction over the whole circumference. A portion between the two locking grooves 53 of the pin 51 is fitted into the through hole without looseness, and the elastic ring 49 is locked in to each of the locking grooves 53. As a result, the pin 51 is prevented from being displaced in the axial direction relative to the base plate 50.

The configuration and operational effects of the other parts of the fifth example are the same as those of the first example and the third example.

### REFERENCE SIGNS LIST

1 Steering device
2 Steering wheel
3 Steering unit
4, 4a, 4b Rotation limiting device
5 Sterred wheels
6 Turning unit
7 Control unit
8 Steering column
9 Steering shaft
10 Reaction force application device
11 Gear housing
12 Steering actuator
13 Tie rods
14, 14a First member
15, 15a Second member
16a, 16b, 16c, 16d, 16e, 16f, 16g, 16h Intermediate member
17, 17a End axially one-sided protrusion
18 Base plate
19 Pin
   19a Pin flange
20 Circular opening
21 Installation holes
22 Press-fit hole
23 End one-sided abutment surface
24 End other-sided abutment surface
25 Cylindrical portion
26 Flange portion
27 End radial protrusion
28 Locking groove
29 Intermediate radial protrusion
30, 30a Intermediate axially one-sided protrusion
31 Base portion
32 Intermediate one-sided abutment surface
33 Intermediate other-sided abutment surface
34 Retaining ring
35 Cylindrical portion
36 Flange portion
37 Radial protrusion
38 Locking groove
39 Circular opening
40 Installation holes
41 Groove portion
42 Retaining ring
43 Intermediate circular opening
44 Intermediate axially other-sided protrusion
45 End axially other-sided protrusion
46 Cut-out portion
47 End one-sided abutment surface
48 End other-sided abutment surface
49 Elastic ring
50 Base plate
51 Pin
52 Through hole
53 Locking groove
100 Stopper unit
101 First rotating member
102 Housing
103 Second rotating member
104 First rotating protrusion
105 Fixed protrusion
106 Cylindrical portion
107 Second rotating protrusion

## Claims

1. A rotation limiting device, comprising:
a first member having an end axially one-sided protrusion protruding toward one side in an axial direction at a location deviated in a radial direction from a center axis thereof,
a second member having an end one-sided abutment surface facing one side in a circumferential direction and an end other-sided abutment surface facing an other side in the circumferential direction, and arranged coaxially with the first member so as to be capable of rotating relative to the first member,
at least one intermediate member which having an intermediate radial protrusion that protrudes toward an outside in the radial direction and an intermediate axially one-sided protrusion protruding from a surface on the one side in the axial direction of the intermediate radial protrusion toward the one side in the axial direction, and arranged between the first member and the second member in the axial direction and coaxially with the first member and the second member so as to be capable of rotating relative to the first member and the second member,
the intermediate radial protrusion having an intermediate one-sided abutment surface on one side surface in the circumferential direction, and an intermediate other-sided abutment surface on an other side surface in the circumferential direction, and
the end one-sided abutment surface and the end other-sided abutment surface circumferentially facing the intermediate axially one-sided protrusion of an intermediate member of the at least one intermediate member that is arranged adjacent to the other side in the axial direction of the second member, and
the intermediate one-sided abutment surface and the intermediate other-sided abutment surface of one intermediate member of the at least one intermediate member circumferentially facing the intermediate axially one-sided protrusion or the end axially one-sided protrusion of another intermediate member that is arranged adjacent to the other side in the axial direction of the one intermediate member.

2. The rotation limiting device according to claim 1, wherein
the second member has an end radial protrusion that protrudes in the radial direction, and
the end radial protrusion has the end one-sided abutment surface on the one side surface in the circumferential direction and the end other-sided abutment surface on the other side surface in the circumferential direction.

3. The rotation limiting device according to claim 1, wherein
the second member has a groove portion that opens at least to a surface on the other side in the axial direction, the end one-sided abutment surface on a surface facing the one side in the circumferential direction of an inner surface of the groove portion, and the end other-sided abutment surface on a surface facing the other side in the circumferential direction of the inner surface of the groove portion.

4. The rotation limiting device according to any of claims 1 to 3, wherein
one of the first member and the second member has a cylindrical portion that protrudes in the axial direction,
the other of the first member and the second member has a circular opening into which the cylindrical portion is fitted so as to be capable of relative rotation, and
the at least one intermediate member has an intermediate circular opening into which the cylindrical portion is fitted so as to be capable of relative rotation.

5. The rotation limiting device according to claim 4, comprising a retaining ring locked to a portion of the cylindrical portion that protrudes in the axial direction from the other member.

6. The rotation limiting device according to any of claims 1 to 5, comprising
a cylindrical elastic ring externally fitted onto the end axially one-sided protrusion and/or the intermediate axially one-sided protrusion.

7. The rotation limiting device according to any of claims 1 to 6, wherein
an outer peripheral surface of the end axially one-sided protrusion and an outer peripheral surface of the intermediate axially one-sided protrusion are configured by cylindrical surfaces having an equal radius of curvature, and
the end one-sided abutment surface and the end other-sided abutment surface, and the intermediate one-sided abutment surface and the intermediate other-sided abutment surface are each configured by a partial cylindrical surface-shaped concave curved surface having an equal radius of curvature that is greater than a radius of curvature of the outer peripheral surface of the end axially one-sided protrusion.

8. The rotation limiting device according to claim 7, wherein
a radius of a first imaginary circle centered on the center axis of the first member and passing through a center axis of the outer peripheral surface of the end axially one-sided protrusion is smaller than a radius of a second imaginary circle centered on a center axis of the intermediate member and passing through a center of curvature of the intermediate one-sided abutment surface and a center of curvature of the intermediate other-sided abutment surface.

9. The rotation limiting device according to any of claims 1 to 8, wherein
the at least one intermediate member is configured by a plurality of intermediate members, and
of the plurality of intermediate members, remaining intermediate members except for an intermediate member which is arranged farthest on the other side in the axial direction has an intermediate axially other-sided protrusion that protrudes from a side surface on the other side in the axial direction of the intermediate radial protrusion toward the other side in the axal direction, and
the second member has an end axially other-sided protrusion at a location deviated in the radial direction from a center axis thereof, the end axially other-sided protrusion protruding toward the other side in the axial direction and circumferentially facing the intermediate one-sided abutment surface and the intermediate other-sided abutment surface of an intermediate member of the plurality of intermediate members that is arranged farthest on the one side in the axial direction.

10. The rotation limiting device according to claim 9, wherein
the intermediate member that is arranged farthest on the other side in the axial direction has an intermediate axially other-sided protrusion that protrudes from a side surface on the other side in the axial direction of the intermediate radial protrusion toward the other side in the axial direction, and
the first member has a cut-out portion in which the intermediate axially other-sided protrusion of the intermediate member arranged farthest on the other side in the axial direction is arranged so as to allow rotation of the intermediate member arranged farthest on the other side in the axial direction relative to the first member.

11. A steering device, comprising
a steering shaft and a rotation limiting device that limits a rotatable amount of the steering shaft to a predetermined value, wherein
the rotation limiting device is configured by the rotation limiting device according to any of claims 1 to 10, and
the first member is joined and fixed to the steering shaft, and the second member is supported and fixed to a fixed portion that does not rotate even during use, or the first member is joined and fixed to the fixed portion and the second member is joined and fixed to the steering shaft.
